# EUROPÄISCHE PATENTSCHRIFT

(11) **EP 1 600 426 B1**
(45) Veröffentlichungstag und Bekanntmachung des Hinweises auf die Patenterteilung: **27.03.2019**
(21) Anmeldenummer: 05009918.3
(22) Anmeldetag: 06.05.2005
(51) Int. Cl.: C02F 1/461, C02F 1/469

(54) **Verfahren und Vorrichtung zur Abtrennung von Sulfationen aus Wässern und zur Einbringung von Pufferkapazität in Wässer**
Method and device for separating off sulfate anions from water and for introducing buffer capacity in water
Procédé et dispositif pour la séparation des anions sulfates de l'eau et pour apporter un pouvoir tampon à l'eau

(30) Priorität: 29.05.2004 DE 102004026447
(43) Veröffentlichungstag der Anmeldung: 30.11.2005
(73) Patentinhaber: Fraunhofer Gesellschaft zur Förderung der angewandten Forschung e.V., 80686 München (DE)
(72) Erfinder: Friedrich, Hans-Jürgen, 01833 Stolpen (DE); Rott, Hans-Jürgen, 01328 Dresden (DE); Knappik, Reinhard Dr., 01277 Dresden (DE)
(74) Vertreter: Kailuweit & Uhlemann Patentanwälte Partnerschaft mbB

(56) Entgegenhaltungen:
- WO-A-95/07752
- DE-A1- 19 962 672
- US-A- 5 254 226
- US-A- 5 439 577
- US-A- 5 534 120
- US-A- 5 788 826
- US-A1- 2002 014 418

## Beschreibung

Die Erfindung betrifft ein Verfahren und eine Vorrichtung zur Abtrennung von Sulfationen aus und zur Einbringung von Pufferkapazität in schwefelsaure Wässer oder schwefelsäurehaltige Lösungen.

Schwefelsaure Wässer entstehen meist, aber nicht ausschließlich durch die Einwirkung natürlicher Verwitterungsprozesse auf sulfidische Minerale, wobei vorwiegend schwefelsaure, Schwermetallkationen enthaltende Wässer gebildet werden, für die neben einer hohen nicht-Karbonathärte und Salinität ein fehlendes Puffervermögen im Neutralbereich der pH-Wertskala kennzeichnend ist. Zusätzlich enthalten diese Wässer häufig auch andere Metallkationen und Anionen, wie Chlorid, Fluorid, Nitrat oder Anionen des Arsens in unterschiedlicher Konzentration. Wässer dieses Ursprungs kommen vor allem in Bergbaugebieten sehr häufig und umfangreich vor (Volumenströme bis zu 100 Mio m³/a sind bekannt) und stellen dort ein großes Umweltproblem dar, da die Einleitung solcher Wässer in die Vorflut sowohl wegen der Schwermetallgehalte als auch wegen des niedrigen pH-Wertes und hoher Sulfatkonzentrationen in hohem Masse unerwünscht und zumeist auch rechtlich unzulässig ist. Das Vorkommen schwefelsaurer Wässer ist aber nicht auf die unmittelbar vom Bergbau betroffenen Gebiete begrenzt. Vielmehr kann es durch natürliche Transportprozesse und/oder Deposition mit dem Niederschlagswasser auch in weit von der Schadstoffquelle entfernten Gebieten zu einer unerwünschten Gewässerversauerung kommen. Ein typisches, aber keinesfalls eingrenzendes Beispiel dafür sind Emissionen aus Anlagen zum Rösten sulfidischer Erze ohne ausreichende Abgasreinigung.

Eine weitere Quelle für solche Wässer sind Oberflächenbehandlungsprozesse, in denen unedle Metalle, d.h. solche, welche in der elektrochemischen Spannungsreihe unedler als Wasserstoff sind, unter Verwendung schwefelsäurehaltiger Lösungen gebeizt, geätzt oder anodisiert werden, wobei ebenfalls schwefelsäurehaltige Metall- und speziell Schwermetallkationen enthaltende Abfalllösungen und Spülwässer entstehen.

Die bekannten Verfahren zur Behandlung oder zur Entsorgung schwefelsaurer, Schwermetallkationen enthaltender Wässer oder Abfalllösungen mit hoher nicht-Karbonathärte und Salinität lassen sich in folgende drei Gruppen einteilen:
- chemische Neutralisationsverfahren
- biochemische Neutralisationsverfahren
- chemisch-physikalische Behandlungsverfahren.

Die chemischen Neutralisationsverfahren zur Behandlung schwefelsaurer Wässer oder Abfalllösungen sind dadurch gekennzeichnet, dass zur Anhebung des pH-Wertes alkalische Substanzen, wie Branntkalk, Kalkstein, Dolomit als Pulver, Granulate oder in Form von Suspensionen in das zu behandelnde Wasser oder in die Lösung eingebracht werden und dadurch eine Neutralisation des schwefelsauren Wassers oder der schwefelsäurehaltigen Lösung bewirkt wird. Andere alkalische Stoffe, wie Natron- oder Kalilauge, Soda oder Pottasche können auch in gelöster Form in das zu behandelnde Wasser oder in die Lösung eingebracht werden.

Obwohl chemische Neutralisationsverfahren weit verbreitet zur technischen Anwendung gelangen, weisen sie vor dem Hintergrund steigender Anforderungen an die Qualität des aufbereiteten Wassers und an die Nachhaltigkeit umwelttechnischer Verfahren erhebliche Nachteile auf. Eine Verminderung der Sulfatgehalte mittels chemischer Neutralisation ist abgesehen von Verdünnungseffekten nur dann möglich, wenn bei der Neutralisation mittels Calcium-haltiger Neutralisationsmittel das Löslichkeitsprodukt für Calciumsulfat überschritten wird. Dies wiederum bedingt Restgehalte von ca. 2 g/l an Sulfationen, was zur Erreichung behördlich vorgegebener Qualitätszielstellungen häufig nicht ausreichend ist. Bei Einsatz der anderen chemischen Neutralisationsmittel ist eine Verminderung der Sulfatgehalte nicht zu erwarten. Lösliche Bariumverbindungen, mit deren Hilfe eine starke Absenkung der Sulfatkonzentration durch Fällungsprozesse möglich wäre, werden letztlich aus Kostengründen für die Behandlung der genannten Wässer und Lösungen nicht im technischen Maßstab eingesetzt.

Neben diesen bereits beschriebenen Nachteilen weisen die chemischen Verfahren weiterhin den Nachteil auf, dass eine Erhöhung des Härtegrades und der Salinität des zu behandelnden Wassers durch den Eintrag zusätzlicher löslicher Ionen erfolgt, was für zahlreiche Verwendungszwecke nachteilig ist. Weiterhin ist die Einbringung einer zusätzlichen Pufferkapazität in das zu behandelnde Wasser nur schwierig zu erreichen, da dies mit einer weiteren unerwünschten Erhöhung des Härtegrades und der Salinität verbunden ist oder aber an der Ausbildung von nicht reaktionsfähigen Deckschichten aus Fällungsprodukten, zumeist bestehend aus hydroxidischen Verbindungen von Aluminium, Eisen und Mangan, auf den in das zu behandelnde schwefelsaure Wasser eingebrachten Neutralisations- und/oder Fällungsmittelpartikeln oder Tröpfchen, scheitert.

Biochemische Neutralisationsverfahren, die auf einer enzymatischen Reduktion der Sulfatanionen unter Verbrauch geeigneter Elektronendonatoren beruhen, bewirken zwar unter bestimmten Randbedingungen eine deutliche Verminderung der Sulfationenkonzentration und sie sind auch prinzipiell geeignet, Pufferkapazität in das zu behandelnde Wasser einzubringen. Sie weisen jedoch andere prinzipielle Nachteile auf, was die praktische Anwendung gegenwärtig noch sehr stark einschränkt. Zunächst müssen, um die Behandlung des schwefelsauren Wassers zu ermöglichen, neben den Bakterienkulturen auch Elektronendonatoren in Form von Substraten wie Methanol, Ethanol, Melasse, Stroh und weiterhin einige essentielle Nährstoffe wie Stickstoff- und Phosphorverbindungen für die Mikroorganismen in das zu behandelnde Wasser eingebracht werden, was aus wasserbehördlicher Sicht zu erheblichen Problemen bei der Genehmigung des Einsatzes solcher Verfahren führen kann (R. Luckner et. al. "Restlochflutung. Maßnahmen zur Steuerung der Wasserbeschaffenheit in den Bergbaufolgeseen der Lausitz", LMBV, Berlin/Dresden 2003, S.39). Nach einer Behandlung dürfen die zuvor eingebrachten Stoffe nicht mehr im Wasser enthalten sein. Bei den Mikroorganismen, die die Umsetzung der Sulfationen zu Sulfidionen bewirken, handelt es sich um obligat anaerobe Bakterien. Mithin ist sicherzustellen, dass sich in den zur Wasserbehandlung eingesetzten technischen Systemen keine pathogenen Mikroorganismenarten ansiedeln, von denen zahlreiche ebenfalls als obligat anaerob bekannt sind. Die Bildung von Sulfidionen aus Sulfationen während der Behandlung der schwefelsauren Wässer oder schwefelsäurehaltigen Lösungen setzt voraus, dass in den zu behandelnden Wässern oder Lösungen solche Metallkationen in genügend hoher Konzentration vorliegen, die mit den gebildeten Sulfidionen unter den Anwendungsbedingungen über Fällungsreaktionen quantitativ schwerlösliche Sulfide bilden. Aus einer weiteren Literaturquelle geht hervor, dass dieser Schritt technisch problematisch sein kann und dem behandelten Wasser nachträglich Fällungs- bzw. Oxidationsmittel zur Absättigung bzw. zur Zerstörung der stöchiometrisch nicht abgesättigten stark toxischen Sulfidionen zugesetzt werden müssen ("Entwicklung, Aufbau und Erprobung einer kleintechnischen Versuchsanlage zur Behandlung saurer, sulfatreicher eisenhaltiger Wässer aus dem Braunkohlenbergbau mit unterschiedlichen Technologien der Sulfatreduktion und der Biosorption", Abschlussbericht BMBF-Vorhaben, Freiberg 1998).

Darüber hinaus weisen die bisher bekannten mikrobiologischen Verfahren weitere Nachteile auf. Zunächst ist die mikrobiologische Sulfatreduktion bei häufig anzutreffenden niedrigen pH-Werten < ca. 4,0 gehemmt, so dass besondere Vorkehrungen zum Start des Reduktionsprozesses zu treffen sind. Ferner ist die Stoffwechselaktivität der Mikroorganismen in bekannter Weise von der Umgebungstemperatur abhängig. Insbesondere bei niedrigen Wassertemperaturen, die in den zahlreich anzutreffenden sauren Oberflächenwässern zeitweilig auch Werte von 273 K erreichen kann, kann der Wasserbehandlungsprozess daher zum Erliegen kommen, wenn keine geeigneten Maßnahmen getroffen werden. Dies aber verteuert den Prozess und gestaltet ihn technisch aufwändiger. Und schließlich müssen die bei der Reduktion der Sulfationen gebildeten Reaktionsprodukte, die aus Metallsulfiden bestehen, aus dem zu behandelnden Wasser oder der zu behandelnden Lösung entfernt werden, zumindest aber dauerhaft vor einer Re-Oxidation geschützt werden. Dies erfordert weitere Aufwendungen bei der Anwendung der mikrobiologischen Verfahren.

Auch den bekannten physikalisch-chemischen Behandlungsverfahren ist eine breitere praktische Anwendung bei der Behandlung schwefelsaurer Wässer oder schwefelsäurehaltiger Lösungen bisher versagt geblieben, sofern das Einsatzziel in der Verminderung des Sulfatgehaltes und in der Einbringung von Pufferkapazität bestand. Unter physikalisch-chemischen Behandlungsverfahren sollen dabei Verfahren wie Ionenaustausch, chemische Fällungen, thermische Verfahren, Ultrafiltrationsprozesse und elektrochemische sowie elektrophysikalische Verfahren verstanden werden. Als nachteilig bei diesen Verfahren sind die technisch aufwändige Verfahrensführung, die im Regelfall kostspielige Entsorgung der anfallenden Begleit- und Nebenprodukte, Materialprobleme durch Ablagerung von Fällungsprodukten auf technisch wichtigen Anlagenteilen bis hin zum Ausfall der betroffenen Komponenten sowie ein vergleichsweise hoher energetischer Aufwand zu nennen. Letztlich führen diese Nachteile zu hohen Kosten beim Einsatz dieser Verfahren. Es ist nachvollziehbar, dass dieser Aufwand sich um so stärker bemerkbar macht, je größer die Menge des zu behandelnden Wassers ist. Gerade bei den durch die Verwitterung sulfidischer Minerale gebildeten schwefelsauren Wässern erreichen die zu behandelnden Wassermengen oft Größenordnungen zwischen einigen Tausend bis hin zu 100 Mio m³ und Jahr.

In der Literatur wurden speziell einige elektrochemische oder elektrophysikalische Verfahren beschrieben, mit denen eine zielgerichtete Verminderung des Sulfatgehaltes erreichbar sein soll. So wird in US 3,823,081 A ein Prozess beschrieben, bei dem man schwefelsaures Wasser durch eine zweigeteilte Elektrolysezelle leitet, die durch einen porösen Separator getrennt ist. Nach Anlegen eines elektrischen Stromes können Sulfatanionen durch den porösen, aus Sand bestehenden Separator in den Anodenraum der Zelle wandern, wo sie mit den in der Anodenreaktion entstehenden Protonen Schwefelsäure bilden. In der Kathodenreaktion werden Wasserstoffionen zu Wasserstoff reduziert. Der Einsatz von Anionenaustauschermembranen zu diesem Zweck wird abgelehnt. Nachteilig bei diesem Verfahren ist der mit 0,1-0,2 Wh/Gallone vergleichsweise sehr hohe Energiebedarf, die Gewinnung einer erheblich verunreinigten Schwefelsäure im Anodenprozess des Verfahrens und die fehlende Einbringung zusätzlicher Pufferkapazität.

US 4,948,489 A beschreibt einen Apparat und ein Verfahren zur Rückgewinnung wässriger Schwermetallhydroxide aus verdünnten Abfalllösungen aus Metallbearbeitungsprozessen. Nach diesem Verfahren wird der zu behandelnde Abwasserstrom, der einen pH-Wert von typischerweise 4,2 - 4,5 aufweist, in den Katodenraum einer Zwei- oder Dreikammerzelle, die eine Anionenaustauschermembran enthält, geleitet und das wässrige System einer Elektrolyse mit hoher Stromdichte bei Zellspannungen, die höher sind als bei konventionellen Elektrolysen, unterzogen. Konkret werden Zellspannungen bis zu 25 V angegeben. Dem Elektrolyten im Katodenraum der Zelle, in dem auch Sulfationen enthalten sein können, werden Fluoridionen in unterschiedlicher Menge zugesetzt, um die Ausfällung von Eisenverbindungen zu verhindern. Über den Elektrolyten im Anodenraum der Zelle wird ausgesagt, dass diesem zum Zweck der Regelung des pH-Wertes basischer Elektrolyt, wie Soda zugesetzt wird. Es wird darauf hingewiesen, dass unter den verfahrensgemäßen Anwendungsbedingungen der Einsatz großflächiger Einheiten vermieden werden muss, um den Einfluss der Katholytleitfähigkeit gering zu halten.

Nachteilig bei diesem Verfahren ist in Verbindung mit der begrenzten elektrischen Leitfähigkeit der schwefelsauren Wässer in jedem Falle die anzuwendende hohe Stromdichte, die zu einem nicht tolerierbaren Energiebedarf bei Behandlung großer Volumenströme führen würde. Da ein Verfahren zur Behandlung größerer Volumenströme den Einsatz größerer Elektrolyseeinheiten erfordert, ist auch die Begrenzung auf kleinere Einheiten hinderlich. Bei hohen Stromdichten werden in der Kathodenreaktion unter den verfahrensgemäßen Bedingungen bevorzugt Hydroxidionen erzeugt, die dann mit anderen im katodischen Volumenstrom enthaltenen Anionen bezüglich der Wanderung durch die Anionenaustauschermembran konkurrieren können. Es ist jedoch bekannt, dass Hydroxidionen bezüglich der Ionenbeweglichkeit anderen Anionen deutlich überlegen sind. Der Zusatz von Fluoridionen zum Volumenstrom im Kathodenraum verhindert verfahrensgemäß die Fällung von Eisenverbindungen. Gerade diese Fällung ist jedoch bei der Behandlung der schwefelsauren Wässer oder der schwefelsäurehaltigen Lösungen erwünscht. Der Zusatz von alkalischen Substanzen zum Anolyten ist u. a. dann unzweckmäßig, wenn in der Anodenreaktion Reaktionsprodukte erzeugt werden sollen, deren Erzeugung einen pH-Wert im sauren Bereich erfordert.

In der europäischen Patentschrift EP 0 964 940 B1 wird ein Verfahren und eine Vorrichtung zum Beizen von Metalllegierungen enthaltenden Produkten ohne Salpetersäure und zur Rückgewinnung gebrauchter Beizlösungen beschrieben. Bei der Durchführung des Verfahrens kommt eine dreigeteilte Elektrolysezelle zum Einsatz, wobei sich zwischen den Kathodenräumen und dem zentral angeordneten Anodenraum Anionenaustauschermembranen befinden. Während im Anodenraum eine Schwefelsäure angereichert und zweiwertige Eisenionen zu dreiwertigen oxidiert werden, erfolgt in einem der beiden Kathodenräume eine Reduktion von dreiwertigem zu zweiwertigem Eisen, wobei die Reduktion von Wasserstoffionen vermieden wird. In dem zweiten der Kathodenräume werden hingegen nur Wasserstoffionen zu Wasserstoff reduziert. Eine der Lösungen aus den Kathodenräumen und der Anolyt werden dann in den Prozess zurückgeleitet, während die Lösung mit den reduzierten Metall(Eisen)-kationen einem Fällungsprozess zugeführt wird, in dem die gelösten Metallsalze ausgefällt werden.

Nachteilig ist bei diesem Verfahren, dass trotz der Trennung der Elektrodenräume mittels Anionenaustauschermembran keine Absenkung der Sulfatkonzentration im Gesamtsystem erreicht wird und diese sogar als unzweckmäßig angesehen wird. Ferner werden die in der Beizlösung enthaltenen Schwermetalle, wie Eisen, nicht als Hydroxide gefällt, so dass hohe Restkonzentrationen an Metallkationen und Sulfatanionen in der behandelten wässrigen Lösung verbleiben. Da in den drei Elektrodenräumen der Zelle jeweils unterschiedliche Elektrodenreaktionen ablaufen sollen, gestaltet sich die Steuerung des Gesamtprozesses schwierig.

In der deutschen Anmeldung DE 199 00 715 A1 wird ein Verfahren und eine Zelle zur elektrochemischen Behandlung aluminiumhaltiger Lösungen beschrieben. Nach diesem Verfahren wird die zu behandelnde aus Oxalsäure, Phosphorsäure, Schwefelsäure und anderen Inhaltsstoffen bestehende Elektrolytlösung wahlweise in den Kathoden- oder den Anodenraum einer Zwei- oder Dreikammerzelle eingeleitet, wobei die Trennung der Elektrodenräume in der Zweikammerzelle wahlweise mit Hilfe einer Anionen- oder einer Kationenaustauschermembran oder eines porösen Separators erfolgen kann. Zur Trennung der Dreikammerzelle kommen jeweils eine Anionen- und eine Kationenaustauschermembran oder allein Kationenaustauschermembranen zum Einsatz. In der Anodenreaktion werden Chrom(III)ionen zu Chrom(VI) oxidiert, während in der Kathodenreaktion Schwermetallkationen als Metalle oder als hydroxidische Beläge auf den Kathoden abgeschieden werden. Im Falle der Dreikammerzelle und im Falle der Verwendung jeweils einer Anionen- und einer Kationenaustauschermembran laufen in den Katodenräumen jeweils unterschiedliche Reaktionen ab. In einer Zelle, die durch eine Kationenaustauschermembran getrennt war, kam Schwefelsäure als Katholyt zum Einsatz.

Nachteilig ist bei diesem Verfahren, dass eine Verminderung der Sulfationenkonzentration nicht erreicht werden kann, denn diese Anionen können nicht durch die Kationenaustauschermembran migrieren. Ebenso wird keine Pufferkapazität in den zu behandelnden Elektrolytstrom eingebracht.

Mehrteilige Elektrolysezellen werden für unterschiedlichste elektrochemische Verfahren genutzt. So ist aus DE 698 14 644 T2 eine Vorrichtung zum Herstellen von ionisiertem Wasser bekannt, die aus einer dreigeteilten Elektrolysezelle besteht, die Trennwände mit Ionenaustauscheinheiten aufweist. Zwischen den Trennwänden ist eine Wasserkammer angeordnet. Weiterhin verfügt jede der Ionenaustauscheinheiten sowohl über eine Kationenaustauschmembran als auch über eine Anionenaustauschmembran. Jede Kathodenelektrode erhält die Hälfte der Menge des elektrischen Stroms, die der Anodenelektrode zugeführt wird. Mit dieser Vorrichtung kann reines saures ionisiertes Wasser, aber auch alkanisch-ionisiertes Wasser erzeugt werden.
DE 102 16 860 A1 offenbart ein Verfahren zur Herstellung von Wasserstoffperoxid mittels einer Zweikammerelektrolysezelle. Die Elektrolysezelle umfasst ein Diaphragma, das die Elektrolysezelle in eine Anodenkammer und in eine Kathodenkammer, die eine Sauerstoffgasdiffusionskathode enthält, unterteilt. Dabei teilt die Sauerstoffgasdiffusionskathode die Kathodenkammer in eine Gaskammer und in eine Lösungskammer, die zwischen der Gaskammer und dem Diaphragma angeordnet ist. Über eine Zuführungsleitung wird Sauerstoff haltiges Gas der Sauerstoffgasdiffusionskatode zugeführt und zu Wasserstoffperoxid reduziert. Das Gas erreicht die Lösungskammer und wird in der Elektrolytlösung gelöst, die aus der Elektrolysezelle in Form einer wässrigen Wasserstoffperoxidlösung entnommen wird. Dabei werden aus dem Ausgangswasser Metallionen entfernt. Für chloridhaltige Lösungen wird eine Elektrode vom Mangandioxidtyp als Anodenkatalysator verwendet.
WO 93/24412 A1 betrifft ein elektrochemisches Verfahren zum Sauerstoffentzug aus Wasser oder wässrigen Lösungen. Dabei wird eine mehrteilige Elektrolysezelle genutzt, bei der eine aus einem Partikelbett bestehende Katodenkammer von zwei Anodenkammern umgeben ist. Die Katodenkammer wird dabei vom Wasser oder der wässrigen Lösung durchflossen. Genutzt wird eine Kationenaustauschmembran zur Trennung von Katoden- und Anodenkammer. Bei einem Wasserdurchfluss von etwa 2 cm³/s wird bei einer Zellspannung von 1,5 - 2,5 V elektrolysiert. Erreicht wird ein Sauerstoffgehalt von weniger als 3 µg/kg Wasser.

In der europäischen Anmeldung EP 0 814 060 A2 wird ein Verfahren zur Anhebung des pH-Wertes saurer Wässer beschrieben, bei dem das saure Wasser in den Kathodenraum einer zweigeteilten Elektrolysezelle geleitet wird, wobei zur Trennung der Elektrodenräume Ionenaustauschermembranen oder poröse Separatoren zum Einsatz kommen. Als Kathodenreaktionen werden die Reduktion von natürlicherweise gelöst im zu behandelnden Wasser vorliegenden Wasserstoffionen und von Sauerstoff genannt. Infolge der Anhebung des pH-Wertes werden im Kathodenraum Schwermetalle hydrolysiert und ausgefällt. Überschüssige Sulfationen wandern über den Separator oder die Ionenaustauschermembran in den Anodenraum der Zelle, wo sie zu verwertbaren Produkten umgesetzt werden.

Nachteilig ist bei diesem Verfahren, dass die Umsetzung von Sauerstoff auf den natürlicherweise im Wasser vorliegenden Konzentrationsbereich beschränkt ist und diese Konzentration damit unter den verfahrensgemäßen Bedingungen eine Konzentration von 10 mg/l am Eingang der Zelle nicht übersteigt. Weiterhin ist nachteilig, dass eine Zellkonstruktion zur Anwendung gelangt, deren Konstruktionsprinzip in der Aneinanderreihung jeweils eines Anoden- und Kathodenraumes besteht. Damit müssen bei der Aufbereitung größerer Volumina der in EP 0 814 060 A2 spezifizierten sauren Wässer unverhältnismäßig große Mengen der teilweise aus Edelmetallen oder aus Edelmetallverbindungen bestehenden Anoden eingesetzt werden, was ökonomisch wenig vorteilhaft ist. Obwohl bei diesem Verfahren eine Verminderung der Sulfationenkonzentration im zu behandelnden Wasser erreicht wird, ist dies insgesamt mit zu hohem technischen und wirtschaftlichen Aufwand verbunden. Ein Einbringen von Pufferkapazität in das zu behandelnde schwefelsaure Wasser oder in die schwefelsäurehaltige Abfalllösung wird mit diesem Verfahren nicht beschrieben. Es stellt jedoch den Ausgangspunkt für die nachfolgend zu beschreibende neue technische Lösung dar.

Die DE 199 62 672 A1 beschreibt ein Verfahren und Vorrichtung zur Herstellung oder Regenerierung von Peroxodisulfaten. Dabei wird in einer zweiteiligen Elektrolysezelle die zu regenerierende Peroxodisulfatlösung im Anodenraum vorgelegt. Schwefelsäurehaltiger Katholyt wird in den Kathodenraum eingeleitet, welcher durch eine Anionenaustauschermembran vom Anodenraum getrennt ist. Sulfationen migrieren aus dem Kathodenstrom in den Anodenraum und werden dort bei einer anodischen Stromdichte von 100 bis 300 mA/cm2 zu Peroxodisulfat oxidiert. Dabei müssen permanent Sulfationen in den Kathodenstrom nachdosiert werden. Eine Anreicherung an Sulfationen aus dem Katholyten soll nicht erzielt werden.

Es sind somit noch kein Verfahren und noch keine technische Vorrichtung beschrieben worden, welche in befriedigender Weise dazu in der Lage sind, aus schwefelsauren Wässern oder schwefelsäurehaltigen Lösungen Sulfationen abzutrennen, Schwermetalle als hydroxidische Verbindungen auszufällen und im pH-Wertbereich um pH = 7 Pufferkapazität in das Wasser einzubringen, ohne dass dabei die nicht-Karbonathärte und die Salinität weiter ansteigen.

Deshalb liegt der Erfindung die Aufgabe zu Grunde, ein Verfahren und eine Vorrichtung zu finden, welche es gestatten, die Sulfatkonzentration in den schwefelsauren Wässern oder den schwefelsäurehaltigen Lösungen zu vermindern und Pufferkapazität einzubringen, ohne dass dem Wasser oder der Lösung dabei schädliche, giftige oder in sonst einer Weise unerwünschte Stoffe zugegeben werden oder diese Stoffe als Reaktionsprodukte entstehen oder entstehen können. Auch soll die Nicht-Karbonathärte und die Salinität des zu behandelnden Wassers bei der Behandlung nicht erhöht, sondern mindestens gleichbleiben oder sogar vermindert werden. Weiterhin soll dass Verfahren und die dazu einzusetzende technische Vorrichtung einen wirtschaftlicheren Einsatz der zu verwendenden Materialien für die Fertigung der Elektrolysezellen und einen sparsameren Umgang mit der zur Durchführung des Verfahrens eingesetzten Energie gestatten, als dies der Stand der Technik ausweist. In den Kathodenräumen der Vorrichtung sollen die zur Entfernung gelöster Schwermetalle notwendigen chemischen Reaktionen wie Hydrolyse und Fällung weiterhin stattfinden, jedoch sollen solche vermieden werden, die zur Bildung unerwünschter Fällungsprodukte wie Calcium- oder Magnesiumhydroxid bzw. Calciumsulfat führen.

Erfindungsgemäß wird die Aufgabe durch ein Verfahren und eine Vorrichtung gemäß den Merkmalen nach Patentanspruch 1 bzw. 7 gelöst. Weitere Ausgestaltungen beinhalten die Merkmale der Ansprüche 2 bis 6 bzw. 8 bis 18.

Erfindungsgemäß wird schwefelsaures Wasser oder die schwefelsäurehaltige Lösung in die beiden Kathodenräume einer dreigeteilten Elektrolysezelle eingeleitet und dort durch Anlegen einer elektrischen Spannung an die Stromzuführungen der Elektroden einer Elektrolyse und Elektrodialyse unterzogen wird, wobei die beiden Kathodenräume beidseitig des mittig zwischen diesen Räumen liegenden Anodenraumes angeordnet sind, zwischen Anodenraum und Kathodenraum jeweils eine Anionenaustauschermembran angeordnet ist und Anionen, darunter hauptsächlich Sulfatanionen, aber auch andere Anionen wie Chlorid, Fluorid und Nitrat aus den Kathodenräumen über die Anionenaustauschermembran in den Anodenraum transportiert und somit abgetrennt werden.

Durch Öffnungen in den Kathoden wird Sauerstoff und/oder Luft und Kohlendioxid oder Kohlendioxid allein in das schwefelsaure Wasser oder in die schwefelsäurehaltige Lösung in fein verteilter Form eingeleitet, wobei der eingeleitete Sauerstoff an der Oberfläche der Katoden elektrochemisch zu Hydroxidionen umgesetzt wird und das Kohlendioxid sich mit den im schwefelsauren Wasser oder der schwefelsäurehaltigen Lösung vorhandenen Kationen der chemischen Elemente Calcium und/oder Magnesium und/oder Kalium und/oder Natrium im Katodenraum zu den entsprechenden Hydrogencarbonaten verbindet und damit die Pufferkapazität im schwefelsauren Wasser oder der schwefelsäurehaltigen Lösung erhöht. Die anodische Stromdichte übertrifft die kathodische Stromdichte um mindestens den Faktor 5 wobei die kathodische Stromdichte bei Werten unter 0,1 A/cm² liegt. Zudem ist die anodische Stromdichte im unteren Teil der Elektrolysezelle höher ist als im oberen Teil der Zelle, wobei die Kathodenräume von unten nach oben durchströmt werden.

Die Anode besteht dabei aus einem Trägermaterial, das zu weniger als 20% mit elektrochemisch aktiven Stoffen beschichtet ist. Die elektrochemisch aktiven Stoffe werden aus der Gruppe Graphit, Glaskohlenstoffe, synthetischer, dotierter Diamant, der chemischen Elemente mit den Ordnungszahlen 44 - 46 und 75 - 79 und deren Legierungen untereinander oder deren oxidische Verbindungen ausgewählt.

Der Abstand zwischen Katode und der Ionenaustauschermembran beträgt zwischen 0,75 und 4 mm. In dem auf diese Weise gebildeten Zwischenraum zwischen Kathode und Ionenaustauschermembran sind Abstandshalter aus elektrisch nichtleitendem Material angeordnet.

Der pH-Wert des schwefelsauren Wassers oder der schwefelsäurehaltigen Lösung ist vor der Abtrennung von Sulfationen kleiner als pH = 7,0.

Der Anolyt enthält gelöste chemische Verbindungen vom Sulfattyp. Der Begriff Sulfattyp schließt erfindungsgemäß neben Sulfaten auch Hydrogensulfate, Schwefelsäure und Peroxodisulfate bzw. Mischungen dieser Verbindungen mit ein. Bevorzugte Verbindungen vom Sulfattyp sind Ammonium-, Natrium-, Kalium-, und Lithiumsulfat und die korrespondierenden Hydrogensulfate dieser Kationen. Alternativ sind Aluminium-, Eisen-, Kupfer-, Mangan-, Nickel- und Cobaltsulfat im Anolyten enthalten, wenn schwefelsäurehaltige Lösungen in den Katodenräumen der Zelle behandelt werden sollen, wobei die Aufzählung nicht begrenzend ist. In weiteren Ausführungsformen enthält der Anolyt Schwefelsäure oder Peroxodisulfate, die ihrerseits durch Oxidation der Sulfatanionen in der Anodenreaktion gebildet werden, oder gelöste Mischungen der genannten Sulfate und Hydrogensulfate, wobei bevorzugt in den Sulfatlösungen als auch in ihren Mischungen Schwefelsäure enthalten ist und die Peroxodisulfatlösungen bevorzugt ebenfalls Schwefelsäure und/oder Hydrogensulfate enthalten. Da einige der Mischungen, wie die von Aluminium- und Kaliumsulfat oberhalb bestimmter, z.B. aus Tabellenbüchern oder aus Standardwerken der anorganischen Chemie z.B. "Gmelins Handbuch der anorganischen Chemie" oder "Ullmanns Enzyklopädie der chemischen Technik" zu entnehmender Konzentrationsbereiche schwer lösliche Salze vom Typ der Doppelsalze bilden können, wird eine Bildung derartiger Doppelsalze innerhalb der Elektrolysezelle vorteilhaft vermieden, in dem die Sulfatsalze in Konzentrationen eingesetzt werden, die unterhalb dieser in der Literatur genannten Konzentrationswerte oder -bereiche liegen.

Die genannten Anolytlösungen enthalten neben Verbindungen vom Sulfattyp bevorzugt auch weitere gelöste Komponenten, vorzugsweise Chlorid- Bromid-, Fluoridionen in Konzentrationen bis zu 1 Mol/l, sowie Thiocyanationen, und/oder Thioharnstoff- und Thioharnstoffderivate und Glycin in Konzentrationen bis zu 10 g/l. Die Konzentration der im Anolyt gelösten chemischen Verbindungen vom Sulfattyp im Zulauf des Anodenraums der Zelle liegt im Bereich von 0,01 - 3,5 Mol/l, sofern die Löslichkeit der genannten Verbindungen dies zulässt, bevorzugt im Bereich von 0,1 - 2,5 Mol/l, besonders bevorzugt 0,25 - 2,5 Mol/l, für Schwefelsäure und Ammoniumsulfat und/oder Ammoniumhydrogensulfat, im Bereich von 0,25 - 1 Mol/l für die Sulfate von Cobalt, Eisen, Mangan, Nickel und für Persulfate des Ammoniums und von 0,1 Mol/l bis 1,2 Mol/l für die Sulfate von Natrium und Kupfer, von 0,1 Mol/l - 0,9 Mol/l für Aluminiumsulfat und von 0,1 - 0,5 Mol/l für Kaliumsulfat. Der Anolyt enthält bevorzugt auch Persulfate von Natrium und Kalium, zuzüglich der genannten Schwefelsäure und gegebenenfalls der weiteren genannten Verbindungen.

In einer bevorzugten Ausführungsform des Verfahrens wird der Anolyt auf Temperaturen im Bereich von 273 - 280 K gekühlt. Dies ermöglicht es vorteilhaft - bei technisch akzeptablen Stromausbeuten > 30% für die genannten Synthesereaktionen - in der Anodenreaktion chemische Verbindungen vom Persulfattyp oder Peroxoschwefelsäure enthaltende Verbindungen zu bilden.

Unter dem Begriff "schwefelsaure Wässer" werden solche Wässer verstanden, deren Entstehung auf natürliche Prozesse, wie z. B. die Oxidation sulfidischer Minerale, zurückzuführen ist und in denen die Konzentration an freier Schwefelsäure den Wert von 0,05 Mol/l nicht übersteigt. Diese Wässer enthalten neben Schwefelsäure häufig auch weitere Säuren, wie Chlorwasserstoff-, Fluorwasserstoff- und Salpetersäure, wobei der Anteil dieser weiteren Säuren häufig erst während des Behandlungsprozesses in Folge von Vorgängen wie Fällung und Hydrolyse freigesetzt wird. Die Menge der durch diese Vorgänge freigesetzten Säure hängt sowohl von der Konzentration als auch von der sogenannten Speziation derjenigen Kationen ab, an die die Sulfationen oder die anderen genannten Anionen chemisch gebunden sind. Mithin ist klar, dass sich für diese Säuremenge kein allgemeingültiger Wert angeben lässt. Die schwefelsauren Wässer können die Kationen von Lithium, Kalium, Natrium, Calcium, Magnesium, Aluminium, Eisen, Mangan, Cobalt, Chrom, Kupfer, Nickel, Vanadin, Thorium, Uran und Zink sowie die Anionen Chlorid, Fluorid und Nitrat in Konzentrationen von jeweils bis zu 10 g/l enthalten und darüber hinaus auch weitere Kationen und Anionen im Konzentrationsbereich bis zu 100 mg/l, darunter speziell auch die Anionen des Arsens und des Antimons sowie weiterhin so genannte refraktäre organische Substanzen, speziell auch Humin- und Fulvosäuren in Konzentrationen, die durch einen TOC-Wert (Total Organic Carbon) bis zu 20 mg/l bezeichnet sind.

Im Unterschied dazu sind die "schwefelsäurehaltigen Lösungen", welche die freie Schwefelsäure in einer Konzentration bis zu 0,25 Mol/l enthalten können, technischen Ursprungs. Die Lösungen sind zudem zumeist auch frei von refraktären organischen Substanzen.

Gegenstand der Erfindung ist auch eine Vorrichtung zur Durchführung des Verfahrens.

Die erfindungsgemäße Vorrichtung zur Abtrennung von Sulfationen aus schwefelsauren Wässern oder schwefelsäurehaltigen Lösungen und zur Einbringung von Pufferkapazität in schwefelsaure Wässer oder schwefelsäurehaltige Lösungen umfasst eine Elektrolysezelle mit mindestens drei Elektrodenräumen, wobei zwischen zwei Kathodenräumen ein Anodenraum angeordnet ist, und zwischen Anodenraum und den Kathodenräumen jeweils eine Anionenaustauschermembran angeordnet ist. Jeder Kathodenraum enthält mindestens eine Elektrode.

Die Kathoden sind mit Öffnungen und/oder Poren zur Einleitung der Gase Sauerstoff, Luft und Kohlendioxid oder Kohlendioxid allein in das schwefelsaure Wasser oder in die schwefelsäurehaltige Lösung versehen.

Die Kathodenräume werden von unten nach oben durchströmt.

Die Anode besteht aus einem Trägermaterial, das zu weniger als 20%, vorzugsweise weniger als 5%, mit den elektrochemisch aktiven Stoffen beschichtet ist. Die elektrochemisch aktiven Stoffe werden dabei aus der Gruppe Graphit, Glaskohlenstoffe, synthetischer, dotierter Diamant, der chemischen Elemente mit den Ordnungszahlen 44 - 46 und 75 - 79 und deren Legierungen untereinander oder deren oxidische Verbindungen ausgewählt.
Der Bedeckungsgrad des Trägermaterials der Anode ist dabei im unteren Drittel der Anode grösser als im mittleren und im mittleren wiederum grösser als im oberen Drittel.

Der Abstand zwischen Kathode und der Anionenaustauschermembran beträgt dabei nicht weniger als 0,75 mm und nicht mehr als 4 mm wobei in dem auf diese Weise gebildeten Zwischenraum zwischen Kathode und Anionenaustauschermembran Abstandshalter aus elektrisch nichtleitendem Material angeordnet sind.

Die Trennung der Elektrodenräume erfolgt jeweils durch eine Anionenaustauschermembran, wobei bevorzugt auf den beiden den Anodenraum zu den Kathodenräumen der Zelle hin begrenzenden Flächen jeweils Anionenaustauschermembranen unterschiedlicher Permeabilität für die abzutrennenden Anionen eingesetzt werden. Daraus ergibt sich eine Möglichkeit zur Beeinflussung der Transportprozesse, insbesondere wenn abgestrebt wird, die beiden Kathodenräume mit in ihrer chemischen Zusammensetzung und/oder in ihrer Temperatur und/oder in ihrem hydrostatischen Druck unterschiedlichen schwefelsauren Wässern oder schwefelsäurehaltigen Lösungen zu beschicken.

Als Membranen kommen Anionenaustauschermembranen zum Einsatz. Bevorzugt finden diese als Copolymerisate unter Verwendung von Polyethylen (PE), Polyvinylchlorid (PVC), Polystyren, Tetrafluorpolyethylen (PTFE) oder Polyvinylidenflourid (PVDF) mit anderen chemischen Verbindungen, die zum Anionaustausch befähigte Gruppen enthalten, Verwendung. Die zum Anionaustausch befähigten Gruppen sind bevorzugt zum Tragen positiver elektrischer Ladungen befähigte Gruppen vom Typ der sekundären, tertiären und quartären Amine. Weiter bevorzugt enthält die Anionenaustauschermembran so genannte Säureblocker.

Zu dem erwiesen sich einige Membranen auch als chemisch unzureichend stabil, speziell solche, deren Grundstruktur allein aus Polystyren besteht und deren Molekülketten untereinander nur unzureichend vernetzt sind.

Als Material für die Kathoden kommen genügend korrosionsbeständige Metalle, Metalllegierungen und Metallverbindungen sowie Kohlenstoff in Form von Graphit oder Glaskohlenstoff zum Einsatz, wobei die metallischen Kathoden als Bleche, Gitter, Streckmetall, Stäbe, Netze, Gewebe oder als geschäumte Metalle ausgeführt sind und die Kathoden aus Graphit oder Glaskohlenstoff ebenfalls als Stäbe, Netze, Gewebe, Platten oder in geschäumter Form eingesetzt werden können. Sofern vollflächige und dichte Materialformen, wie Bleche und Platten, eingesetzt werden, sind diese mit Öffnungen, wie Bohrungen, Kanäle oder Schlitze, versehen, die einen Gaseintrag in den Katholyten von der Rückseite der Katode aus, d.h. von der Seite, die der Anode abgewandt ist, erlauben.

Bei den genügend korrosionsbeständigen Metallen handelt es sich um jene chemischen Elemente mit den Ordnungszahlen 26 - 30, 41, 42 sowie 46, 47, wobei diese bevorzugt zusätzlich mit jeweils mindestens einem weiteren Element aus dieser Gruppe oder mit mindestens einem weiteren Element aus der Gruppe der chemischen Elemente mit den Ordnungszahlen 22 - 25, 32, 40, 44, 45, 58 - 79 legiert sind, um Stähle, insbesondere um solche, die im technischen Sprachgebrauch als Edelstähle bezeichnet werden, sowie um Verbindungen der bezeichneten Metalle mit chemischen Elementen, die durch die Ordnungszahlen 5, 6, 14, 16 und 34 gekennzeichnet sind. Unter dem Begriff der Legierung fallen solche Mischungen von mindestens zwei unterschiedlichen der genannten Metalle, die neben dem den Hauptbestandteil bildenden Metall zu mindestens 0,5 Atom-% aus mindestens einem weiteren Metall bestehen.

Die Kathoden enthalten bevorzugt mindestens eine Verbindung, die aus diesen o. g. Elementen und den Elementen mit den Ordnungszahlen 5, 6, 14, 16 und 34 zusammengesetzt ist. Die Metalle mit den Ordnungszahlen 26 - 30, 41, 42 sowie 46, 47, Graphit oder Glaskohlenstoff sind bevorzugt an ihrer zur Anode hin zeigenden Oberfläche mit den genannten Verbindungen oder mit den Metallen, die durch die Ordnungszahlen 22 - 25, 44 - 47, 75 - 79 gekennzeichnet sind oder mit deren Legierungen mit mindestens einem weiteren Metall aus der Gruppe mit den Ordnungszahlen Nr. 22 - 30, 32, 40, 44, 45, 58 - 79 beschichtet, wobei die Dicke der Beschichtung vorzugsweise zwischen 0,1 und 10 Mikrometern liegt und die Beschichtung selbst bevorzugt aus den jeweiligen nanoskopischen Partikeln wie ein- oder mehrwandige Nanoröhrchen (nano- oder bucky tubes) besteht. In einer weiteren Ausführungsform wird die Beschichtung zur Fertigung der Katoden auch auf elektrisch leitfähige Kunststoffe, wie leitendes Polyethylen, Polystyren, Polypropylen, Polyimid oder Polyacetylen aufgebracht, so dass die Katoden dann aus einem stabilisierenden Grundkörper aus den genannten Kunststoffen und der Beschichtung bestehen.

Die Anode besteht aus noch stärker korrosionsbeständigen Metallen, Metalllegierungen, oxidischen Verbindungen dieser Metalle, aus Graphit oder Glaskohlenstoff oder weist eine Beschichtung aus synthetischem mit Bor dotiertem Diamant auf. Die Gruppe dieser stärker korrosionsbeständigen Metalle umfasst die chemischen Elemente mit den Ordnungszahlen 44 - 46 und 75 - 79 und deren Legierungen untereinander. Bevorzugt werden die genannten Metalle, deren Legierungen untereinander oder auch die oxidischen Verbindungen dieser Metalle auch auf chemisch ausreichend beständige und elektrisch gut leitfähige Trägermaterialien aufgebracht. Derart bevorzugte Trägermaterialien sind diejenigen chemischen Elemente mit den Ordnungszahlen 22, 40 - 42, 72 - 74 und 82 und deren Legierungen untereinander oder mit anderen Elementen, sowie auch chemisch ausreichend beständige, elektrisch nichtleitende Kunststoffe, wie PVC, Polyethylen, Polypropylen, PTFE, PVDF, sowie weiterhin Gläser sowie keramische Werkstoffe.

Als Zwischenschicht zwischen den letztgenannten als Trägermaterial fungierenden Metallen und deren Legierungen und den Metallen aus der Reihe der chemischen Elemente 44 - 46 und 75 - 79 und deren Legierungen oder deren oxidische Verbindungen sind bevorzugt zusätzliche Schichten bestehend aus den Oxiden der chemischen Elementen 50, 51 und 83, deren Mischungen untereinander sowie mit weiteren in Säuren schwerlöslichen halbleitenden Oxiden aufgebracht.

Die sowohl aus den Metallen der in der Gruppe mit den Ordnungszahlen 44 - 46 und 75 - 79 gekennzeichneten chemischen Elemente oder deren Legierungen bestehende Anode als auch das Trägermaterial können in Form von Blechen, Folien, Streckmetall, Drähten, Nanoröhren, Geweben, in hohler Form als Röhrchen oder in Form von Schüttungen eingesetzt werden.

Die zu behandelnden schwefelsauren Wässer und schwefelsäurehaltigen Lösungen sind überwiegend auch dadurch charakterisiert, dass sie gegenüber den in der elektrochemischen Technik üblichen Elektrolytsystemen über eine weitaus geringere elektrische Leitfähigkeit verfügen und dass diese elektrische Leitfähigkeit maßgeblich durch den Gehalt der bereits genannten Inhaltsstoffe in den schwefelsauren Wässern oder den schwefelsäurehaltigen Lösungen determiniert wird. Folglich ist es zweckmäßig, zur Behandlung dieser Wässer und Lösungen über technische Vorrichtungen zu verfügen, die diesem Verwendungszweck optimal angepasst sind.

Aus energetischen Gründen ist man nach dem Stand der Technik bestrebt, bei der Behandlung von Elektrolyten mit geringer Leitfähigkeit möglichst geringe Abstände zwischen den Elektroden und den Membranen zu realisieren und nach Möglichkeit sogar bemüht, diesen Abstand im Sinne einer so genannten Null-Lücken (zero-gap) Konfiguration auf Werte nahe 0 mm zu bringen.

Von den Erfindern durchgeführte systematische Untersuchungen zur Stromdichte- und Potentialverteilung an den Katoden sowie zur Konzentrations- und Strömungsgeschwindigkeitsverteilung in den Zellenräumen der Elektrolysezelle zeigten jedoch, dass nicht nur, wie zu erwarten war, größere Elektroden-Membranabstände im Bereich von 7 mm und mehr sehr nachteilig im Hinblick auf den Energiebedarf des Behandlungsprozesses sind. Überraschend wurde gefunden, dass auch sehr niedrige Abstände von 0,45 mm bis hinab zu 0 mm sich nachteilig auf den Energiebedarf auswirken. Der optimale Elektroden- Membranabstand hängt dabei neben den üblicherweise zur Auslegung von elektrochemischen Reaktoren herangezogenen physikalischtechnischen Kenngrößen überraschenderweise auch von der so genannten Speziation der in den schwefelsauren Wässern oder den schwefelsäurehaltigen Lösungen enthaltenen Verbindungen der Metallkationen mit Sulfatanionen ab, insbesondere von der Konzentration von Verbindungen und Ionen des Typs H⁺, HSO₄⁻, Fe³⁺, Fe²⁺, Fe(SO₄)⁺, Fe(SO₄)⁻, FeOH²⁺, Fe(OH)₂⁺, FeH₃SiO₄²⁺, Al³⁺, AlSO₄⁺, Al(SO₄)₂⁻, AlF²⁺.

Es versteht sich, dass auch weitere gelöste Kationen der entsprechenden Wertigkeitsstufen diesen hier genannten Verbindungen und Ionen analoge Verbindungen und komplexe Ionen zu bilden in der Lage sind, diese im zu behandelnden Wasser enthalten sein können und entsprechend zu berücksichtigen sind. Weiterhin wurde gefunden, dass die Art der Speziation unterhalb eines Anteiles von weniger als 1 % an den Verbindungen der jeweiligen Kationenart in den untersuchten Fällen für die Auslegung unerheblich ist. Die Speziation ist bevorzugt durch Anwendung spektroskopischer, Laser-spektroskopischer, elektrochemischer, chromatographischer und massanalytischer Verfahren zu ermitteln.

Dieser Einfluss der Speziation manifestierte sich auch beim Vergleich verfahrenstechnischer Parameter, die bei der Behandlung verschiedener schwefelsaurer Wässer einerseits mit synthetisch durch Auflösen der entsprechenden Metallsalze und von Schwefelsäure in destilliertem Wasser andererseits hergestellten Wässern erzielt wurden, in überraschend deutlicher Weise. Erfindungsgemäß beträgt deshalb der Abstand zwischen den Katoden und den Anionenaustauschermembranen nicht weniger als 0,75 mm und nicht mehr als 4 mm.

In den Zwischenraum zwischen den Elektroden der Zelle und den Ionenaustauschermembranen werden Abstandshalter aus elektrisch nichtleitendem Material angeordnet, wobei dieses Material aus chemisch gegenüber Säuren und Alkalien beständigen Kunststoffen wie PVC, Polyethylen, Polyester, Polypropylen, PTFE, PVDF, aus Glas- oder anderen nicht leitenden Mineralen oder Werkstoffen besteht.

Die Abstandhalter werden in Form von Netzen, Fasern, Faserbündeln, Geweben, Drähten, Noppen oder Stegen in den Zwischenraum eingebracht. Bevorzugt hat das Netz oder Gewebe eine möglichst hohe Apertur, vorzugsweise von 50% der nominellen Fläche und besonders bevorzugt von mehr als 65% der Fläche. Auch die übrigen der genannten Materialformen bedecken bevorzugt weniger als 50%, besonders bevorzugt weniger als 35% der Elektrodenfläche.

Weiterhin ist es vorteilhaft, wenn die Strömung des Elektrolyten in den Katodenräumen der Zelle, die von unten nach oben durchströmt werden, ein gleichmäßiges Strömungsprofil aufweist. Zahlreiche aus dem Stand der Technik bekannte Zellenkonstruktionen weisen zentrale Einlaufsysteme zur Einspeisung des Elektrolyten auf, die aber im Hinblick auf die zu lösende Aufgabe letztlich keine optimale Durchströmung der Katodenräume gestatten. Namentlich in Elektrodialysezellen finden auch kanalförmige Spacer Verwendung, die ausgehend von einer zentralen Elektrolyteinspeisung nach einem komplizierten Muster eine vollständige und möglichst gleichmäßige Ausnutzung der überströmten Membran- oder Elektrodenfläche bewirken sollen. Gerade wenn in dem zu behandelnden Elektrolyten Hydrolyse- und Fällungsreaktionen ablaufen können, erweist sich dieses aus dem Stand der Technik bekannte Konstruktionsprinzip als nachteilig, da Verblockungen der Kanäle auftreten können.

Es wurde gefunden, dass die zur Abtrennung von Sulfationen und zur Einbringung von Pufferkapazität in schwefelsaure Wässer oder in schwefelsäurehaltige Lösungen wünschenswerte Erzielung eines homogenen Strömungsprofils in einfacher Weise dadurch realisiert werden kann, wenn unmittelbar über dem zentralen Einlass für den Elektrolyten in den Elektrodenräumen der Elektrolysezelle und in Strömungsrichtung nach oben abschließend mit der Unterkante der Elektroden eine Strömungs-Verteilerkomponente angeordnet wird, die aus einer parallel angeordneten Struktur paralleler Kanäle mit kammartiger, rechteckiger, ovaler oder kreisförmiger Geometrie besteht, wobei der Durchmesser dieser Kanäle zwischen 0,5 und 10 mm, vorzugsweise zwischen 0,75 und 4 mm liegt und die hydraulisch undurchlässigen Zwischenräume zwischen den Öffnungen der Kanäle eine Breite zwischen 1,0 und 10 mm, bevorzugt zwischen 2,5 und 6 mm, aufweist.

Die Strömungs-Verteilerkomponente ist bevorzugt in die Zellenrahmenkonstruktion der Elektrolysenzelle integriert.

Sollen erfindungsgemäß Sulfatanionen und ggfs. weitere Anionen aus schwefelsauren Wässern und/oder schwefelsäurehaltigen Lösungen entfernt werden, migrieren diese Anionen nach Anlegen einer ausreichend hohen Gleichspannung an Kathode und Anode von den Katodenräumen in den Anodenraum der Zelle, wo sie chemisch durch Reaktion mit Komponenten des Anolyten und/oder elektrochemisch durch Reaktion an der Anode zu Reaktionsprodukten wie Metallsulfaten, Ammoniumsulfat, Ammonium-, Kalium- oder Natriumhydrogensulfat, Schwefelsäure, zu den Peroxodisulfaten von Ammonium, Kalium oder Natrium, zu Peroxoschwefelsäure oder im Falle der Migration von Chlorid-, Fluorid- oder Nitrationen zu den entsprechenden Chloriden, Fluoriden, Nitraten, zu Chlor, zu Chlorit oder Chlorat umgesetzt werden. Überraschend wurde gefunden, dass sich sowohl die Darstellung von solchen Reaktionsprodukten, die üblicherweise eine hohe anodische Stromdichte größer als 0,1 A/cm² bei ihrer Elektrosynthese erfordern, wie Persulfate oder Peroxoschwefelsäure oder auch oxidierte Anionen des Chlors, nur dann mit guter Effektivität von über 50% Stromausbeute bei gleichzeitiger Verminderung der Sulfationen- bzw. der Anionenkonzentration in den Kathodenräumen der Zelle darstellen lassen, wenn das Trägermaterial der Anode nur zu weniger als 20% seiner Oberfläche, vorzugsweise zu 5% und weniger seiner Oberfläche mit den als elektrochemisch aktives Anodenmaterial dienenden Werkstoffen aus der Gruppe Graphit, Glaskohlenstoffe, synthetischer, dotierter Diamant, der chemischen Elemente mit den Ordnungszahlen 44 - 46 und 75 - 79 und deren Legierungen untereinander oder deren oxidische Verbindungen bedeckt ist. Noch effektiver ist der Einsatz des elektrochemisch aktiven Materials, wenn es so auf das Trägermaterial aufgebracht wird, dass bei ansonsten homogener flächiger Verteilung der Anteil der bedeckten Fläche des Trägermaterials im unteren Drittel der so gebildeten Anode um 2-20%, vorzugsweise um 5-10% über der dem Gesamtdurchschnitt der Belegung der gesamten Anode liegt, während er im oberen Drittel der Anode um eben diesen Betrag unter dem Durchschnittswert der Bedeckung liegt. Im mittleren Teil der Anode entspricht der Bedeckungsgrad der rechnerischen durchschnittlichen Bedeckung. Die Anode ist so zu gestalten, dass die als das elektrochemisch aktive Material dienenden Werkstoffe beide zu den Membranen weisenden Oberflächen der Anode bedecken, wobei die Anode beidseitig von Anolyt umströmt wird. Auf diese Weise wird der Einsatz der zumeist teuren, aus Edelmetallen, Glaskohlenstoff oder synthetischem Diamant bestehenden Anode gegenüber konventionellen Elektrodenanordnungen mindestens halbiert.

Da die zu behandelnden schwefelsauren Wässer und schwefelsäurehaltigen Lösungen durch elektrolytische Leitfähigkeiten von jeweils kleiner als 10 mS/cm und als 50 mS/cm charakterisiert sind, meist jedoch durch elektrolytische Leitfähigkeiten von jeweils kleiner als 5 mS/cm und als 20 mS/cm, sinkt in diesen Wässern die elektrolytische Leitfähigkeit noch weiter ab, wenn daraus Anionen, darunter hauptsächlich Sulfatanionen, aber auch andere Anionen wie Chlorid, Fluorid und Nitrat, über die Anionenaustauschermembran in den Anodenraum transportiert und somit abgetrennt werden, womit nicht nur ein Massen- sondern auch ein Transport elektrischer Ladungen nach Anlegen einer ausreichend hohen Zellspannung beschrieben ist. Andererseits werden in der Kathodenreaktion entsprechend der sich an der Katode einstellenden elektrochemischen Gleichgewichtspotentiale zunächst im Wasser gelöster Sauerstoff, dann die an die freie Schwefelsäure gebundenen Protonen und schließlich die bei der Hydrolyse der gelösten Metallkationen freigesetzten Protonen sowie schließlich Wasser reduziert, wobei die Endprodukte der Reduktionsreaktion in jedem Falle unbeschadet des Auftretens möglicher Intermediate Wasserstoff und/oder Hydroxidionen darstellen. In der Folge erhöht sich der pH-Wert in den Kathodenräumen der Elektrolysezelle, wobei am Eintritt der schwefelsauren Wässer oder der schwefelsäurehaltigen Lösungen in die Kathodenräume ein pH-Wert im sauren Bereich kennzeichnend ist und am Ablauf ein pH-Wert im Bereich von 4,5 - 9,5, vorzugsweise im Bereich 5,5 - 8,5, charakteristisch ist. In der weiteren Folge dieser pH-Wert-Erhöhung und der Abtrennung von Sulfat und anderen Anionen werden diejenigen Metallkationen ausgefällt, die unter den Konzentrationsverhältnissen im Katodenraum schwerlösliche hydroxidische Verbindungen bilden und/oder diejenigen, die von diesen Verbindungen adsorbiert werden, speziell auch die Anionen des Arsens. Die Erhöhung des pH-Wertes auf Werte >7,0 ist gleichbedeutend damit, dass zusätzliche Pufferkapazität in das schwefelsaure Wasser oder die schwefelsäurehaltige Lösung eingebracht wird, was einer Rückversauerung und ebenso einer Rücklösung der gefällten Metallkationen entgegenwirkt. Da diese Pufferkapazität in-situ in den Kathodenräumen der Elektrolysezelle in molekularer Form gebildet wird und dabei keine unerwünschten Nebenprodukte entstehen, ist diese Form der Einbringung anderen bekannten Verfahren zur Behandlung solcher Wässer oder Lösungen überlegen.

Dieser Effekt lässt sich nutzbringend weiter ausgestalten, in dem durch die in den Kathoden enthaltenen Öffnungen hindurch gasförmiger Sauerstoff oder Luft von der Rückseite der Kathoden in den Elektrolytraum zwischen Kathode und Ionenaustauschermembran eingeleitet wird, wozu in den Wandungen der Kathodenräume Kanäle angeordnet sind, aus denen die genannten Gase in unterschiedlicher Höhe entlang des Strömungsweges des kathodischen Elektrolyten in fein verteilter Form von Gasbläschen mit einem Durchmesser <0,10 mm oder aber durch Diffusion durch gasdurchlässige Kunststoffmembranen, wie solche die exemplarisch und ohne Anspruch auf Vollzähligkeit der Nennung aus PVC, Polyethylen, Silikon oder PTFE gefertigt sind, an die Oberfläche der Kathoden gelangen, um dort zu Hydroxidionen umgesetzt zu werden. Dabei ist klar, dass in letztgenanntem Falle die Gasaustrittsöffnungen der Kanäle mit den entsprechenden Membranen zu versehen sind. Überraschenderweise zeigte es sich, dass die Vorkehrung des Einleitens von Sauerstoff in die Kathodenräume auch die Potentialeinstellung an den Kathoden positiv beeinflusst, da auf diese Weise das Gleichgewichtselektrodenpotential, das in Strömungsrichtung zum Ausgang der Zelle immer stärker negative Werte annimmt, erhöht werden kann, so dass insgesamt eine um 10 - 150 mV niedrigere Gesamtzellspannung der Elektrolysezelle resultierte.

Der Abtrennung größerer Anteile von Sulfationen, insbesondere von mehr als 20 - 30 der ursprünglich vorhandenen Menge an Sulfationen, aus den schwefelsauren Wässern oder den schwefelsäurehaltigen Lösungen und der Einbringung von Pufferkapazität sind in verschiedenen Fällen Grenzen gesetzt, insbesondere dann, wenn die Wässer oder die Lösungen größere Mengen an Calcium- und/oder Magnesiumionen enthalten. Infolge des eintretenden Anstiegs des pH-Wertes kann das Löslichkeitsprodukt für die Hydroxide dieser chemischen Elemente überschritten werden. Ablagerungen an oder auf den Elektroden oder an weiteren wichtigen Komponenten der Elektrolysezelle können die weitere Folge dieser Vorgänge sein. Es wurde nun überraschend gefunden, dass sich diese unerwünschten Vorgänge umgehen lassen, wenn in die Kathodenräume der Elektrolysezelle nicht nur Sauerstoff oder Luft, sondern auch Kohlendioxid eingeleitet wird, wobei auch Kohlendioxid allein eingeleitet werden kann. Das eingeleitete Kohlendioxid reagiert mit den Ionen von Calcium und von Magnesium zu den entsprechenden Hydrogencarbonaten, welche als leichtlöslich bekannt sind und verhindert so die Bildung der genannten Ablagerungen. Gleichzeitig wird durch die genannten Hydrogencarbonate sowie ggfs. auch die sich bildenden Hydrogencarbonate weiterer Elemente, wie diejenigen des Natriums oder des Kaliums, die über ein zusätzliches Puffervermögen in der Nähe des Neutralbereiches verfügen, zusätzliche Pufferkapazität in das zu behandelnde schwefelsaure Wasser oder die schwefelsäurehaltigen Lösungen eingebracht. Auf diese Weise kann nicht nur die abgetrennte Sulfatmenge entscheidend erhöht werden, sondern auch das Puffervermögen gegenüber einer Rückversauerung stark verbessert werden. Kohlendioxid kann dem behandelten Wasser auch unmittelbar nach dem Verlassen der Kathodenräume zugegeben werden. Auf diese Weise gelang bei verschiedenen schwefelsauren Wässern eine Abtrennung von bis zu 90 % der ursprünglich enthaltenen Sulfatmenge, ohne dass es zu Prozessstörungen kam. Konkret wurden schwefelsaure Wässer mit Sulfatgehalten zwischen 0,8 und 2,2 g/l auf diese Weise behandelt.

Die kathodische Stromdichte liegt bei der Abtrennung von Sulfationen und der Einbringung von Pufferkapazität in die schwefelsauren Wässer oder in die schwefelsäurehaltigen Lösungen bei Werten unter 0,1 A/cm², vorzugsweise jedoch bei Werten zwischen 0,05 und 0,030 A/cm², um eine möglichst niedrige Zellspannung zu erzielen. Die Zellspannung zwischen jeweils einer der Kathoden der Zelle und der Anode liegt im Bereich zwischen 2,5 und 12 V, vorzugsweise jedoch im Bereich zwischen 3,0 und 7,5 V.

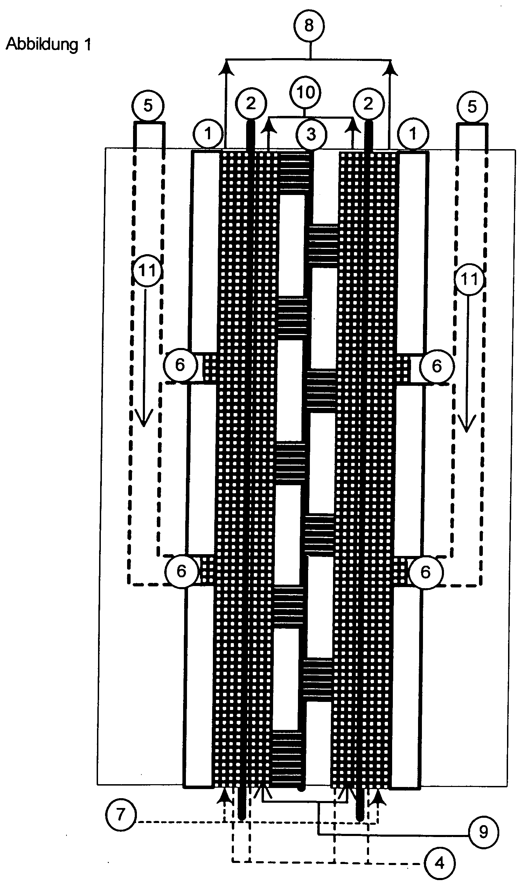

In Abb. 1 ist der Grundtyp der erfindungsgemäßen Elektrolysezelle dargestellt. Zwischen den senkrecht angeordneten Kathoden (1) und den Anionenaustauschermembranen (2) sowie zwischen den Anionenaustauschermembranen und der Anode (3) befinden sich jeweils die Abstandshalter (4) zur Gewährleistung des bevorzugten, speziell des besonders bevorzugten Abstandes zwischen den Elektroden und den Anionenaustauschermembranen. Über Kanäle (11) oder Bohrungen, die jeweils hinter den Kathoden im Zellenrahmen angeordnet sind oder die sich jeweils in den Kathoden selbst befinden, und mittels entsprechender Anschlüsse (5) zur Einleitung der Gase Sauerstoff, Luft und/oder Kohlendioxid gelangen die genannten Gase zu den Austrittsöffnungen (6) an der der Anionenaustauschermembranen zugewandten Oberfläche der Kathoden, die bevorzugt mit gaspermeablen Kunststoffmembranen versehen sind. Werden bevorzugt Kathoden mit poröser, für die genannten Gase permeabler Struktur eingesetzt, kann auf den Einsatz der gaspermeablen Kunststoffmembranen verzichtet werden. An der Oberfläche der Kathoden wird Sauerstoff elektrochemisch reduziert. Die Anode weist zu weniger als 20% ihrer Oberfläche, besonders bevorzugt zu 5% und weniger, eine Beschichtung des Trägermaterials mit den bezeichneten elektrochemisch aktiven Stoffen auf, wobei der Anteil der beschichteten Oberfläche im unteren Drittel der Anode höher ist als im mittleren und im mittleren wiederum höher als im oberen Drittel. Dies ist durch entsprechende Erhebungen auf dem Trägermaterial der Anode (3) schematisch kenntlich gemacht. Die Zuführung des Anolyten erfolgt über entsprechende Zuleitungen und Anschlussöffnungen (9) durch den Rahmen der Zelle hindurch in den Anodenraum, wo der Anolyt über die Anode strömt und nach erfolgter elektrochemischer Umsetzung an der Anode über die Austrittsöffnungen (10) im Rahmen der Zelle dieselbige verlässt und einer weiteren Behandlung zugeführt oder direkt verwertet wird. Mit dem Anolytstrom werden auch in der Anodenreaktion gebildete gasförmige Reaktionsprodukte, wie Sauerstoff oder Chlor, aus dem Anodenraum abtransportiert.

Das schwefelsaure Wasser oder die schwefelsäurehaltige Lösung werden den Kathodenräumen der Zelle durch den Zellenrahmen hindurch über die Zuleitungen (7) zugeführt. Nach Überströmen der Oberfläche der Kathoden und nach verfahrensgemäßer Abtrennung von Sulfat- und ggfs. noch weiteren Anionen sowie dem Eintrag von Pufferkapazität und bei gleichzeitiger Reduktion von Wasserstoffionen und von Sauerstoff sowie einem Eintrag von Kohlendioxid in den Katholyten verlässt das aufbereitete Wasser oder die aufbereitete schwefelsäurehaltige Lösung die Kathodenräume über die Austrittsöffnungen (8) im Rahmen der Zelle. Im Kathodenraum der Zelle gefällte Hydroxide und entstehendes Wasserstoffgas sowie unverbrauchte Anteile der Gase Luft, Sauerstoff und/oder Kohlendioxid werden mit dem Katholytstrom aus den Kathodenräumen abtransportiert.

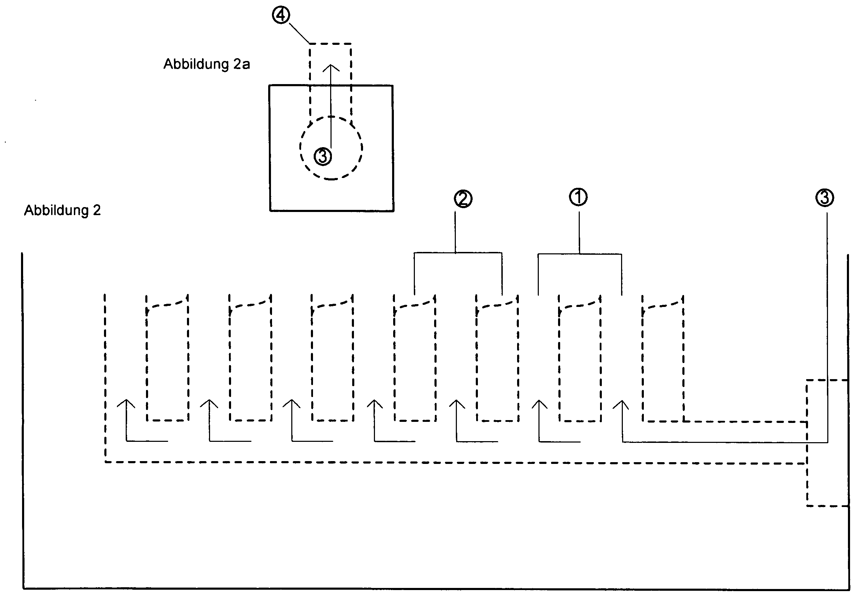

Unmittelbar über den Elektrolytzuleitungen für den Kathodenraum ist bevorzugt in den Zellenrahmen eine Strömungsverteilerkomponente integriert, deren schematischer Aufbau in den Abb. 2 und Abb. 2a dargestellt ist. Über eine zentrale Zuleitung für das schwefelsaure Wasser oder die schwefelsäurehaltigen Lösungen wird dieses Wasser oder die Lösung in den Verteilerkanal, (Abb. 2/Abb. 2a) eingeleitet und von dort in einer Struktur parallel angeordneter Kanäle, (Abb. 2) mit kammartiger, rechteckiger, ovaler oder kreisförmiger Geometrie in erfindungsgemäßer Weise verteilt, wobei sich zwischen diesen Kanälen die hydraulisch undurchlässigen Zwischenräume (Abb. 2) befinden. Über die Austrittsöffnungen der Kanäle (Abb. 2a), angeordnet anschließend an die untere Kante der Kathoden, strömt das schwefelsaure Wasser oder die schwefelsäurehaltige Lösung die den Anionenaustauschermembranen zugewandte Oberfläche der Kathoden mit einem homogenen Strömungsprofil an.

Die Elektrolysezelle enthält neben den genannten Komponenten auch alle weiteren Bestandteile, die für eine erfindungsgemäße Funktion erforderlich sind, insbesondere korrosionsfeste Stromzuführungen für die Elektroden, einen alle Elektrodenräume umschließenden mehrteiligen Zellenrahmen, medienbeständige Dichtungen umlaufend entlang der Auflageflächen der Membranen auf dem Zellenrahmen, bevorzugt solche aus mehrdimensional expandiertem PTFE, sowie geeignete Mittel zur stabilen, aber lösbaren Fixierung der Vorrichtung und ihrer Bestandteile in der erfindungsgemäßen Anordnung wie Schrauben, Bolzen, Hilfsrahmen und sonstige mechanische oder hydraulische Spannvorrichtungen.

In den nachfolgenden Beispielen kommt eine Elektrolysezelle entsprechend Abb. 1 zum Einsatz, bei der eine Strömungs-Verteilerkomponente entsprechend zum Einsatz, bei denen eine Strömungs-Verteilerkomponente entsprechend Abb. 2 / Abb. 2a zur Erzielung eines möglichst gleichmäßigen parallelen Strömungsprofils in die Zellenrahmenkonstruktion auf der Katodenseite integriert ist. Diese Strömungs-Verteilerkomponente weist parallele Kanäle mit einer Breite von jeweils 3,5 mm und einer Länge von jeweils 25 mm auf. Die Breite der Stege zwischen diesen Kanälen liegt bei 4 mm und bevorzugt bei 2 mm an den äußeren Rändern.

Die Referenzbeispiele dienen dabei der Veranschaulichung der Erfindung.

### Referenzbeispiel 1

Schwefelsaures Wasser in der chemischen Zusammensetzung 1150 mg/l SO₄²⁻, 25 mg/l Cl⁻, 0,8 mg/l F⁻, 2,2 mg/l NO₃⁻, 4,0 mg/l NH₄⁺, 11,2 mg/l Al³⁺, 31,3 mg/l Ca²⁺, 43,5 mg/l Mg²⁺, 9,5 mg/l K⁺, 3,8 mg/l Mn²⁺, 33,0 mg/l Na⁺, jeweils 0,060 mg/l Cu²⁺ und Co²⁺, 0,090 mg/l Zn²⁺, 0,030 mg/l Ni²⁺, 0,015 mg/l Cr³⁺, ferner Spuren von Kationen der Lanthanoide, der Kationen von Blei, Cadmium und Silber, des Arsens, des Antimons, von Thorium und von Uran im Konzentrationsbereich <0,010 mg/l, weiterhin gekennzeichnet durch einen TOC-Gehalt von 3,8 mg/l, einen pH-Wert vor Beginn der Behandlung von 2,78 und eine elektrolytische Leitfähigkeit von 2,16 mS/cm, einen Sauerstoffgehalt von 8 mg/l sowie weiterhin durch eine Basenkapazität von 3,6 Mol/m<3> bezogen auf pH = 7, ermittelt durch Titration eines 100 ml-Aliquots des schwefelsauren Wassers gegen IN NaOH mit potentiometrischer Indikation, wurde in einer dreigeteilten Elektrolysezelle einer Elektrolyse/Elektrodialyse unterzogen.

Die Elektrolysezelle enthielt neben zwei Kathoden in den Abmessungen jeweils 10 cm breit und 13 cm lang aus 1 mm dicken Nickelblech, das oberflächlich mit einer 2 Mikrometer dünnen Legierungsschicht bestehend aus 70% Silber und 30% Palladium beschichtet war, auch zwei Anionenaustauschermembranen gleichen Fabrikats, die die Katodenräume von dem sich mittig dazwischen befindlichen Anodenraum trennten. Die Anode bestand aus einem Streckmetall aus Niob in einer Größe von 6 cm * 8 cm mit einer geometrischen Elektrodenoberfläche von 14,2 cm², das oberflächlich in einer Schichtdicke von 1 Mikrometer mit synthetischem, mit Bor dotiertem Diamant beschichtet war. Der Abstand zwischen den Katoden und den Anionenaustauschermembranen hat jeweils 2,1 mm betragen und derjenige zwischen der Anode und den Membranen 4,2 mm. Zur Fixierung der Abstände kamen Abstandshalter aus 2,1 mm starkem Polyestergewebe mit einem offenen Flächenanteil (Apertur) von 70% in ein- oder zwei (Anodenraum) Lagen zum Einsatz, die die Membranen beidseitig über die ganze Flächenausdehnung bedeckten.

Durch den Anodenraum der Zelle zirkulierte eine Lösung bestehend aus 1,5 Mol/Ammoniumsulfat und 0,5 Mol/l Ammoniumhydrogensulfat zu Beginn der Behandlung des schwefelsauren Wassers.

Zur Durchführung der Behandlung des schwefelsauren Wassers wurde dies mit einem Volumenstrom von jeweils 7,5 1/h in die Kathodenräume der Zelle gepumpt und die Zelle kathodisch mit einer Stromdichte von jeweils 7,5 mA/cm² und anodisch mit einer Stromdichte von 69 mA/cm², jeweils bezogen auf eine Halbseite der Anode beaufschlagt. Als Zellspannung stellte sich nach einer Anfangsphase ein Wert von 6,3 V ein. Die Elektrolysezelle wurde über einen Zeitraum von 16 h kontinuierlich in der beschriebenen Weise betrieben. Im Abstand von jeweils zwei Stunden wurden dem aus der Zelle abfließenden Elektrolyten Proben zur analytischen Ermittlung der Parameter Stromausbeute, Pufferkapazität, pH-Wert, elektrolytische Leitfähigkeit und Sulfatkonzentration im ursprünglich schwefelsauren Wasser entnommen. Bei diesen Analysen konnte festgestellt werden, dass das ehemals schwefelsaure Wasser mit einem pH-Wert von 8,5 und einer Leitfähigkeit von 1,66 mS/cm aus der Zelle ablief. Dabei hatte sich die Sulfatkonzentration um 320 mg/l verringert und die Chloridionenkonzentration um 5 mg/l. Eine Bestimmung der Pufferkapazität lieferte einen Säurebedarf von 0,7 Mol/m³ zum Erreichen eines pH-Wertes von 7,0 im ablaufenden Wasser, womit 0,7 Mol/m³ Pufferkapazität in das Wasser eingebracht waren. Weiterhin wurden die Konzentrationen von Eisen- und Aluminiumionen auf Werte <0,1 mg/l vermindert worden sowie die von Manganionen auf einen Wert <0,2 mg/l. Auch die Konzentrationen weiterer Schwermetallkationen, speziell die von Cu, Co, Cr, Ni, Th, U, Pb sowie die von As-Anionen, wurde vermindert. In der Anodenreaktion wurde Ammoniumperoxodisulfat mit einer Stromausbeute von 57% erzeugt. Für die Behandlung des schwefelsauren Wassers bei gleichzeitiger Erzeugung von Ammoniumperoxodisulfat mussten 0,70 kWh/m³ an elektrischer Energie aufgewendet werden.

### Ausführungsbeispiel 1

In selbiger Dreikammerzelle, die mit einer Anode bestehend aus einer 9 cm * 10 cm großen PVC-Platte, die mit einem Platindraht mit einem Durchmesser von 0, 5mm in der Weise umwickelt war, dass der Abstand zwischen den Wicklungsbahnen im unteren Drittel der PVC-Platte 5 mm, im mittleren Drittel 7 mm und im oberen Drittel 10 mm betragen hat, ausgerüstet war, wurde bei ansonsten gleicher Versuchsanordnung das oben beschriebene schwefelsaure Wasser bei einem Stromfluss von jeweils 0,9 A über die Katoden elektrolysiert. Zusätzlich wurde jedoch der Anolyt mittels eines Kryostaten auf 274 K gekühlt und dem Anolyten zusätzlich je 1 g/l NaCl und Thioharnstoff zugesetzt. Während sich für die Abtrennung von Sulfat, Chlorid und der genannten Kationen, die elektrische Leitfähigkeit und die Pufferkapazität des ehemals schwefelsauren Wassers jeweils nahezu identische Werte ergaben, erhöhte sich der elektrische Energiebedarf für die Behandlung geringfügig auf 0,85 kWh/m³.

### Referenzbeispiel 2

In einer Elektrolysezelle, die wiederum aus zwei Kathodenräumen und einem Anodenraum bestand, die durch zwei Anionenaustauschermembranen gleichen Fabrikats getrennt waren, wurde ein schwefelsaures Wasser elektrolysiert, das einen pH-Wert von 2,9, einen Basenkapazität von 3,8 Mol/m³ bis pH = 7, eine elektrolytische Leitfähigkeit von 2,3 mS/cm, einen Sulfatgehalt von 1720 mg/l, einen Eisengehalt von 75 mg/l, daneben noch weitere Anionen in Konzentrationen < 50 mg/l und Kationen in Konzentrationen <300 mg/l enthielt. Die Katoden bestanden aus segmentierten Edelstahl-Blechen nach DIN 17440/1014 von je 10 cm Breite und 5,5 cm Länge, die in den insgesamt 10 cm Breite und 50 cm Höhe messenden Katodenräumen der Zelle angeordnet waren. Zwischen diesen Segmenten befanden sich Streifen aus porösem Polyethylen mit einem Porendurchmesser von bis zu 20 Mikrometern und von je 10 cm Länge und 1 cm Breite, die jeweils über Bohrungen von 5 mm Durchmesser angeordnet waren, die sich in der Rückwand der Zelle befanden und die über entsprechend abgedichtete Verschraubungen mit einer Gaszuleitung für die Gase Sauerstoff, Luft und/oder Kohlendioxid verbunden waren.

Die Anode bestand aus einem 10 cm * 50 cm großen Titan-Streckmetall von 1 mm Stärke, das beidseitig mit Platin-Iridium-Mischoxid in einer Schichtdicke von 1,5 Mikrometern beschichtet war. Als Anolyt kamen Lösungen zum Einsatz die zu Beginn der Versuche 0,25 Mol/l Ammoniumsulfat oder 0,1 Mol/l Schwefelsäure enthielten.

Zwischen den Elektroden und den Membranen befanden sich die bereits in Beispiel 1 beschriebenen Kunststoffnetze als Abstandshalter bei ebenfalls gleichen Elektroden-Membran-Abständen.

Die Elektrolyse des schwefelsauren Wassers lieferte bei einem Durchfluss von 50 1/h, einer kathodischen Stromdichte von 10 mA/cm² und einer anodischen Stromdichte von 50 mA/cm² eine Verminderung des Sulfatgehaltes des ehemals schwefelsauren Wassers um 350 mg/l, wobei bis zu einem pH-Wert von 8,5 am Ablauf der Katodenräume 0,8 Mol/m³ Basenkapazität eingebracht wurden. Die Zellspannung der Elektrolyse lag bei 7,3 V und der Verbrauch an elektrischer Energie bei 0,82 kWh/m³ für Ammoniumsulfat als Anolyten und bei 1,17 kWh/m³ für die Anreicherung von 0,1 molarer zu 0,25 molarer Schwefelsäure. Dieser Versuch wurde über einen Zeitraum von 100 h kontinuierlich und störungsfrei durchgeführt.

Wird während der Elektrolyse über Gaszuleitungen Luft oder Sauerstoff mit einem Überdruck von 0,3 - 0,8 bar in den oberflächennahen Bereich der Kathoden in das zu behandelnde Wasser eingeleitet, war eine Verminderung der Zellspannung um 0,05 - 0,1 V feststellbar.

Beim Einsatz von Ammoniumsulfatlösung als Anolyt wurde zusätzlich Kohlendioxid in das zu behandelnde, den Kathodenraum durchströmende Wasser eingeleitet und das zu behandelnde schwefelsaure Wasser ein bis fünfmal durch die Kathodenräume der Zelle geleitet, wobei sich die Anzahl der Behandlungszyklen nach der abzutrennenden Sulfatmenge und der einzubringenden Pufferkapazität richtete. Während die kathodische Stromdichte im ersten Zyklus weiterhin bei 10 mA/cm² lag, wurde sie im dritten und vierten Behandlungszyklus zunächst auf 7,5, im fünften auf 5 mA/cm² abgesenkt, um nicht erwünschte thermische Energieverluste zu limitieren. Die anodische Stromdichte verringerte sich entsprechend der an den Katoden eingestellten Stromdichte. Nach dem zweiten Zyklus waren 730 mg/l an Sulfationen abgetrennt und in den Anodenraum überführt worden, nach dem vierten Zyklus 1220 mg/l und nach dem fünften schließlich 1410 mg/l. Der pH-Wert des behandelten Wassers war kleiner oder gleich 8,3. Die elektrolytische Leitfähigkeit verminderte sich von anfangs 2,3 mS/cm auf 0,85 mS/cm im Ablauf nach Durchlaufen des fünften Zyklus. Nach dem zweiten Zyklus erhöhte sich die Pufferkapazität (Säurekapazität bis pH = 7) auf 1,4 Mol/m³ und nach dem dritten Zyklus auf 1,9 Mol/m³. Die Ermittlung der Pufferkapazität erfolgte durch Titration eines Aliquots des behandelten Wassers gegen 1,0 N Salzsäure und potentiometrischer Indikation.

### Referenzbeispiel 3

In einer Dreikammerzelle, deren prinzipieller Aufbau nach Referenzbeispiel 1 erfolgte, sollte aus schwefelsaurer Lösung bestehend aus Ammoniumsulfat der Konzentration 0,1 Mol/l und Schwefelsäure der Konzentration 0,25 Mol/l, welche den Katholyten bildete, Schwefelsäure entfernt und damit Sulfationen abgetrennt werden.

Als Anolyt diente eine Schwefelsäure der Konzentration. 1 Mol/l. Im Unterschied zu Ausführungsbeispiel 1 war die Zelle jedoch mit zwei Kathoden aus einem 10 cm x 13 cm großen Titan-Streckmetall von 1 mm Stärke ausgerüstet, das beidseitig mit Platin-Iridium-Mischoxid in einer Schichtdicke von 1,5 Mikrometern beschichtet war. Als Anode fand ebenfalls dieses Material in den gleichen Abmessungen Verwendung. Zur Abtrennung der Schwefelsäure und speziell der Sulfationen aus dem Katholyten wurde die in die Kathodenräume eingespeiste Lösung mit Volumenströmen 3, 6 und 12 l/h durch diese Räume zirkuliert, wobei die beiden Kathodenräume der Zelle hydraulisch sowohl in Reihe als auch parallel geschaltet waren, während durch den Anodenraum die Schwefelsäure mit einer Durchflussgeschwindigkeit von 4,5 l/h zirkulierte. Die Elektrolyse wurde mit einem kathodischen Strom von je 5 A und einem anodischen Strom von 10 A betrieben. Nach einer Anfangsphase von ca. 20 min Dauer wurde aus den jeweils 1 Liter fassenden Vorlagegefäßen der Elektrolysezelle kontinuierlich mittels einer Schlauchpumpe frische Lösung bzw. Schwefelsäure zudosiert und behandelte Lösung bzw. angereicherte Schwefelsäure entnommen. Dabei stellte sich ein pH-Wert von 9,49 im Vorlagegefäß für die ehemals schwefelsaure Lösung ein, so dass aus der vorher schwefelsauren Lösung bei einer Zellspannung von 5,62 V mehr als 0,25 Mol Sulfat entfernt worden sind.

## Patentansprüche

1. Verfahren zur Abtrennung von Sulfationen aus und zur Einbringung von Pufferkapazität in schwefelsaure Wässer oder schwefelsäurehaltige Lösungen,
- bei dem schwefelsaures Wasser oder eine schwefelsäurehaltige Lösung in die beiden Kathodenräume einer dreigeteilten Elektrolysezelle eingeleitet wird und dort einer Elektrolyse und Elektrodialyse unterzogen wird, wobei die dreigeteilte Elektrolysezelle wie folgt ausgebildet ist:
∘ die beiden Kathodenräume sind beidseitig des mittig zwischen diesen Räumen liegenden Anodenraumes angeordnet,
∘ zwischen Anodenraum und den Kathodenräumen ist jeweils eine Anionenaustauschermembran (2) angeordnet,
∘ die Anode (3) besteht aus einem Trägermaterial, das zu weniger als 20% mit elektrochemisch aktiven Stoffen ausgewählt aus der Gruppe Graphit, Glaskohlenstoffe, synthetischer, dotierter Diamant, der chemischen Elemente mit den Ordnungszahlen 44 - 46 und 75 -79 und deren Legierungen untereinander oder deren oxidische Verbindungen beschichtet ist, der Bedeckungsgrad des Trägermaterials der Anode ist im unteren Drittel der Anode grösser als im mittleren und im mittleren wiederum grösser als im oberen Drittel,
∘ der Anolyt enthält gelöste chemische Verbindungen vom Sulfattyp,
∘ der Abstand zwischen Kathode (1) und der Anionenaustauschermembran (2) beträgt nicht weniger als 0,75 mm und nicht mehr als 4 mm, wobei in dem auf diese Weise gebildeten Zwischenraum zwischen Kathode und Anionenaustauschermembran Abstandshalter (4) aus elektrisch nicht leitendem Material angeordnet sind,
- wobei in dem schwefelsauren Wasser oder der schwefelsäurehaltigen Lösung vorhandene Anionen aus den Kathodenräumen durch die Anionenaustauschermembran in den Anodenraum transportiert und somit abgetrennt werden,
- wobei in die Kathodenräume Sauerstoff und/oder Luft und Kohlendioxid oder Kohlendioxid allein in das schwefelsaure Wasser oder in die schwefelsäurehaltige Lösung in fein verteilter Form eingeleitet werden, wobei der eingeleitete Sauerstoff an der Oberfläche der Kathoden elektrochemisch zu Hydroxidionen umgesetzt wird und das Kohlendioxid sich mit den im schwefelsauren Wasser oder der schwefelsäurehaltigen Lösung vorhandenen Kationen der chemischen Elemente Calcium und/oder Magnesium und/oder Kalium und/oder Natrium im Kathodenraum zu den entsprechenden Hydrogencarbonaten verbindet und damit die Pufferkapazität im schwefelsauren Wasser oder der schwefelsäurehaltigen Lösung erhöht wird,
- wobei die anodische Stromdichte die kathodische Stromdichte um mindestens den Faktor fünf übertrifft und die kathodische Stromdichte bei Werten unter 0,1 A/cm² liegt, und die anodische Stromdichte im unteren Teil der Elektrolysezelle höher ist als im oberen Teil der Zelle,
- wobei die Kathodenräume von unten nach oben durchströmt werden.

2. Verfahren nach Anspruch 1, **dadurch gekennzeichnet, dass** die im Anolyten gelösten chemischen Verbindungen vom Sulfattyp ausgewählt sind aus Ammonium-, Natrium-, Kalium-, und Lithiumsulfat und/oder korrespondierende Hydrogensulfate und/oder korrespondierende Peroxodisulfate und/oder Schwefelsäure.

3. Verfahren nach Anspruch 1, **dadurch gekennzeichnet, dass** die im Anolyten gelösten chemischen Verbindungen vom Sulfattyp ausgewählt sind aus Aluminium-, Eisen-, Kupfer-, Mangan-, Nickelsulfat, wenn schwefelsäurehaltige Lösungen in den Kathodenräumen der Zelle behandelt werden.

4. Verfahren nach einem der Ansprüche 1 bis 3, **dadurch gekennzeichnet, dass** die Anolytlösungen als weitere gelöste Komponenten Chlorid-, und/oder Bromid-, und/oder Fluoridionen in Konzentrationen bis zu 1 Mol/l, und/oder Thiocyanationen, und/oder Thioharnstoff- und Thioharnstoffderivate und Glycin in Konzentrationen bis zu 10 g/l enthalten.

5. Verfahren nach einem der Ansprüche 1 bis 4, **dadurch gekennzeichnet, dass** in den Kathodenräumen der Zelle in dem schwefelsauren Wasser oder der schwefelsäurehaltigen Lösung enthaltene Schwermetallionen hydrolysiert und gefällt werden und dass eine Fällung der Hydroxide von Calcium und Magnesium durch die Einleitung von Kohlendioxid vermieden wird.

6. Verfahren nach einem der Ansprüche 1 bis 5, **dadurch gekennzeichnet, dass** neben Sulfationen auch die Anionen von Brom, Chlor, Fluor, Arsen sowie Nitrationen abgetrennt werden.

7. Vorrichtung zur Abtrennung von Sulfationen aus schwefelsauren Wässern oder schwefelsäurehaltigen Lösungen und zur Einbringung von Pufferkapazität in schwefelsaure Wässer oder schwefelsäurehaltige Lösungen, umfassend:
- eine Elektrolysezelle mit mindestens drei Elektrodenräumen,
∘ wobei zwischen zwei Kathodenräumen ein Anodenraum angeordnet ist,
∘ wobei zwischen Anodenraum und den Kathodenräumen jeweils eine Anionenaustauschermembran (2) angeordnet ist,
∘ wobei jeder Elektrodenraum mindestens eine Elektrode enthält,
∘ wobei die Kathoden mit Öffnungen und/oder Poren zur Einleitung der Gase Sauerstoff, Luft und/ Kohlendioxid oder Kohlendioxid allein in das schwefelsaure Wasser oder in die schwefelsäurehaltige Lösung versehen sind, wobei die Kathodenräume von unten nach oben durchströmt werden können,
∘ wobei die Anode (3) aus einem Trägermaterial besteht, das zu weniger als 20% mit elektrochemisch aktiven Stoffen ausgewählt aus der Gruppe Graphit, Glaskohlenstoffe, synthetischer, dotierter Diamant, der chemischen Elemente mit den Ordnungszahlen 44 - 46 und 75 -79 und deren Legierungen untereinander oder deren oxidische Verbindungen ausgewählt sind beschichtet ist,
∘ wobei der Bedeckungsgrad des Trägermaterials der Anode im unteren Drittel der Anode grösser als im mittleren und im mittleren wiederum grösser als im oberen Drittel
∘ wobei der Abstand zwischen Kathode (1) und der Anionenaustauschermembran (2) nicht weniger als 0,75 mm und nicht mehr als 4 mm beträgt,
∘ und wobei in dem auf diese Weise gebildeten Zwischenraum zwischen Kathode und Anionenaustauschermembran Abstandshalter (4) aus elektrisch nicht leitendem Material angeordnet sind.

8. Vorrichtung nach Anspruch 7, **dadurch gekennzeichnet, dass** die Kathodenräume symmetrisch zu einem benachbarten zentralen Anodenraum angeordnet sind,

9. Vorrichtung nach Anspruch 7 oder 8, **dadurch gekennzeichnet, dass** die Anode aus Streckmetall, gelochten Blechen, Geweben bestehen, die nicht mehr als 20%, vorzugsweise nicht mehr als 5%, der Fläche des Anodenraumes überdecken, und der Anode die Ionenaustauschermembranen beidseitig gegenüber liegen.

10. Vorrichtung nach einem der Ansprüche 7 bis 9, **dadurch gekennzeichnet, dass** die Anode aus Graphit, Glaskohlenstoff besteht oder eine Beschichtung mit synthetischem, mit Bor dotiertem Diamant aufweist.

11. Vorrichtung nach einem der Ansprüche 7 bis 10, **dadurch gekennzeichnet, dass** Trägermaterial der Anode in Form von Blechen, Folien, Streckmetall, Drähten, Nanoröhren, Geweben, in hohler Form als Röhrchen, oder in Form von Schüttungen eingesetzt wird.

12. Vorrichtung nach einem der Ansprüche 7 bis 11, **dadurch gekennzeichnet, dass** das Trägermaterial der Anode aus den Kunststoffen PVC, Polyethylen, Polypropylen, PTFE und/oder PVDF besteht.

13. Vorrichtung nach Anspruch 12 **dadurch gekennzeichnet, dass** die Kathoden mit Metallen, die durch die Ordnungszahlen 22-25, 44-47, 75-79 gekennzeichnet sind oder mit deren Legierungen mit mindestens einem weiteren Metall aus der Gruppe mit den Ordnungszahlen Nr. 22-30, 32, 40, 44, 45, 58-79 beschichtet sind und die Beschichtung aus den jeweiligen nanoskopischen Partikeln, single- oder multi walled nano-tubes besteht.

14. Vorrichtung nach einem der Ansprüche7 bis 13, **dadurch gekennzeichnet, dass** die Kathoden als Bleche, Gitter, Streckmetall, Stäbe, Netze, Gewebe oder in geschäumter Form ausgeführt sind.

15. Vorrichtung nach einem der Ansprüche 7 bis 14, **dadurch gekennzeichnet, dass** als Kathoden vollflächige und dichte Materialformen eingesetzt werden, welche mit Öffnungen versehen sind, die einen Gaseintrag in den Katholyten von der Rückseite der Kathode aus erlauben.

16. Vorrichtung nach einem der Ansprüche 7 bis 15, **dadurch gekennzeichnet, dass** die Kathoden aus einem stabilisierenden Grundkörper aus elektrisch leitfähigen Kunststoffen, ausgewählt aus leitendem Polyethylen, Polystyren, Polypropylen, Polyimid oder Polyacetylen und einer metallischen Beschichtung aus den Materialien wie in Anspruch 13 definiert, bestehen.

17. Vorrichtung nach Anspruch 7, **dadurch gekennzeichnet, dass** in die Elektrodenräume der Zelle jeweils zwischen die Elektroden und die Anionenaustauschermembranen Abstandshalter aus elektrisch nicht leitendem Material angeordnet werden, wobei dieses Material aus chemisch gegenüber Säuren und Alkalien beständigen Kunststoffen, aus Glas- oder anderen nicht leitenden Mineralen oder Werkstoffen besteht, das in Form von Netzen, Fasern, Faserbündeln, Geweben, Noppen oder Stegen in den Zwischenraum eingebracht wird und das als Netz oder Gewebe eine möglichst hohe Apertur von > 50% der nominellen Fläche aufweist und auch von den anderen als Abstandshalter dienenden Materialformen weniger als 50% der auf die Anionenaustauschermembran zuweisenden Querschnittsfläche der Elektrodenräume überdeckt werden.

18. Vorrichtung nach Anspruch 7, **dadurch gekennzeichnet, dass** unmittelbar über den Elektrolytzuleitungen für den Kathodenraum der Elektrolysezelle in den Zellenrahmen und um die Austrittsöffnungen der Kanäle eine Strömungs-Verteilerkomponente integriert ist, wobei die Strömungs-Verteilerkomponente aus einer parallel angeordneten Struktur paralleler Kanäle mit kammartiger, rechteckiger, ovaler oder kreisförmiger Geometrie besteht, wobei der Durchmesser dieser Kanäle zwischen 0,5 und 10 mm liegt und die hydraulisch undurchlässigen Zwischenräume zwischen den Öffnungen der Kanäle eine Breite zwischen 1,0 und 10 mm aufweisen.

## Claims

1. A method for separating sulphate ions from and for introducing buffer capacity into sulphuric waters or sulphuric acid-containing solutions,
- in the case of which sulphuric water or a sulphuric acid-containing solution is introduced into the two cathode chambers of a three-part electrolysis cell and is subjected there to electrolysis and electro dialysis, wherein the three-part electrolysis cell is formed as follows:
∘ the two cathode chambers are arranged on both sides of the anode chamber lying between these chambers,
∘ an anion exchanger membrane (2) is arranged in each case between the anode chamber and the respective cathode chambers,
∘ the anode (3) consists of a carrier material, less than 20% of which is coated with electrochemically active substances selected from the group of graphite, glassy carbons, synthetic, doped diamond, the chemical elements with the atomic numbers 44 - 46 and 75 - 79 and their alloys among one another or their oxidic compounds, the degree of coverage of the carrier material of the anode is greater in the lower third of the anode than in the middle and in turn greater in the middle than in the upper third,
∘ the anolyte contains dissolved chemical compounds of the sulphate type,
∘ the distance between cathode (1) and the anion exchanger membrane (2) is no less than 0.75 mm and no more than 4 mm, wherein spacers (4) made of electrically non-conductive material are arranged in the intermediate space formed in this manner between cathode and anion exchanger membrane,
- wherein anions present in the sulphuric water or the sulphuric acid-containing solution are transported from the cathode chambers into the anode chamber through the anion exchanger membrane and therefore separated,
- wherein oxygen and/or air and carbon dioxide or carbon dioxide alone are introduced into the sulphuric water or into the sulphuric acid-containing solution in finely distributed form in the cathode chambers, wherein the oxygen introduced is electrochemically converted on the surface of the cathodes into hydroxide ions and the carbon dioxide is combined with the cations, present in the sulphuric water or the sulphuric acid-containing solution, of the chemical elements calcium and/or magnesium and/or potassium and/or sodium in the cathode chamber to form the corresponding hydrogen carbonates and therefore the buffer capacity in the sulphuric water or the sulphuric acid-containing solution is increased,
- wherein the anodic current density exceeds the cathodic current density by at least a factor of five and the cathodic current density is at values below 0.1 A/cm², and the anodic current density is higher in the lower part of the electrolysis cell than in the upper part of the cell,
- wherein the flow passes through the cathode chambers from bottom to top.

2. The method according to claim 1, **characterised in that** the chemical compounds of the sulphate type dissolved in the anolyte are selected from ammonium, sodium, potassium and lithium sulphate and/or corresponding hydrogen sulphates and/or corresponding peroxide sulphates and/or sulphuric acid.

3. The method according to claim 1, **characterised in that** the chemical compounds of the sulphate type dissolved in the anolyte are selected from aluminium, iron, copper, manganese, nickel sulphate when sulphuric acid-containing solutions are treated in the cathode chambers of the cell.

4. The method according to any one of claims 1 to 3, **characterised in that** the anolyte solutions contain as further dissolved components chloride and/or bromide and/or fluoride ions in concentrations of up to 1 mol/l and/or thiocyanate ions and/or thiourea and/or thiourea derivatives and glycine in concentrations of up to 10 g/l.

5. The method according to any one of claims 1 to 4, **characterised in that** heavy metal ions contained in the sulphuric water or the sulphuric acid-containing solution are hydrolysed and precipitated in the cathode chambers of the cell and **in that** precipitation of the hydroxides of calcium and magnesium is prevented by the introduction of carbon dioxide.

6. The method according to any one of claims 1 to 5, **characterised in that** in addition to sulphate ions, the anions of bromine, chlorine, fluorine, arsenic and nitrate ions are separated.

7. A device for separating sulphate ions from sulphuric waters or sulphuric acid-containing solutions and for introducing buffer capacity in sulphuric waters or sulphuric acid-containing solutions, comprising:
- an electrolysis cell with at least three electrode chambers,
∘ wherein an anode chamber is arranged between two cathode chambers,
∘ wherein an anion exchanger membrane (2) is arranged in each case between the anode chamber and the respective cathode chambers,
∘ wherein each electrode chamber contains at least one electrode,
∘ wherein the cathodes are provided with openings and/or pores to introduce the gases oxygen, air and carbon dioxide or carbon dioxide alone into the sulphuric water or into the sulphuric acid-containing solution, wherein the flow can pass through the cathode chambers from bottom to top,
∘ wherein the anode (3) consists of a carrier material, less than 20% of which is coated with electrochemically active substances selected from the group of graphite, glassy carbons, synthetic, doped diamond, the chemical elements with the atomic numbers 44 - 46 and 75 - 79 and their alloys among one another or their oxidic compounds,
∘ wherein the degree of coverage of the carrier material of the anode is greater in the lower third of the anode than in the middle and in turn greater in the middle than in the upper third,
∘ wherein the distance between cathode (1) and the anion exchanger membrane (2) is no less than 0.75 mm and no more than 4 mm,
∘ and wherein spacers (4) made of electrically non-conductive material are arranged in the intermediate space formed in this manner between cathode and anion exchanger membrane.

8. The device according to claim 7, **characterised in that** the cathode chambers are arranged symmetrically with respect to an adjacent central anode chamber.

9. The device according to claim 7 or 8, **characterised in that** the anode consists of expanded metal, perforated metal sheets, fabrics, which cover no more than 20%, preferably no more than 5%, of the surface of the anode chamber and the ion exchanger membranes lie on both sides opposite the anode.

10. The device according to any one of claims 7 to 9, **characterised in that** the anode consists of graphite, glassy carbon or has a coating with synthetic, boron-doped diamond.

11. The device according to any one of claims 7 to 10, **characterised in that** carrier material of the anode is used in the form of metal sheets, films, expanded metal, wires, nano tubes, fabrics, in hollow form as tubes, or in the form of filling.

12. The device according to any one of claims 7 to 11, **characterised in that** the carrier material of the anode consists of the plastics PVC, polyethylene, polypropylene, PTFE and/or PVDF.

13. The device according to claim 12, **characterised in that** the cathodes are coated with metals, which are identified by the atomic numbers 22 - 25, 44 - 47, 75 - 79 or with their alloys with at least one further metal from the group with the atomic numbers 22 - 30, 32, 40, 44, 45, 58 - 79 and the coating consists of the respective nanoscopic particles, single or multi-walled nano tubes.

14. The device according to any one of claims 7 to 13, **characterised in that** the cathodes are configured as metal sheets, grids, expanded metal, rods, meshes, fabric or in a foamed form.

15. The device according to any one of claims 7 to 14, **characterised in that** continuous and dense material forms are used as cathodes which are provided with openings which allow gas entry into the catholytes from the rear side of the cathode.

16. The device according to any one of claims 7 to 15, **characterised in that** the cathodes consist of a stabilising base body made of electrically conductive plastics selected from conductive polyethylene, polystyrene, polypropylene, polyimide or polyacetylene and a metallic coating made of the materials as defined in claim 13.

17. The device according to claim 7, **characterised in that** spacers made of electrically non-conductive material are arranged in the electrode chambers of the cell in each case between the electrodes and the anion exchanger membranes, wherein this material consists of plastics chemically resistant to acids and alkalines, of glass or other non-conductive minerals or substances which is introduced in the form of meshes, fibres, fibre bundles, fabrics, nubs or ridges in the intermediate chamber and which has as the mesh or fabric a highest possible aperture of > 50% of the nominal surface area, and less than 50% of the cross-sectional area of the electrode chambers pointing towards the anion exchanger membrane is covered by the other material forms serving as spacers.

18. The device according to claim 7, **characterised in that** a flow distributor component is integrated directly via the electrolyte supply lines for the cathode chamber of the electrolysis cell in the cell frame and around the outlet openings of the channels, wherein the flow distributor component consists of a structure arranged in parallel of parallel channels with comb-shaped, rectangular, oval or circular geometry, wherein the diameter of these channels is between 0.5 and 10 mm and the hydraulically impermeable intermediate spaces between the openings of the channels have a width of between 1.0 and 10 mm.

## Revendications

1. Procédé de séparation d'ions sulfate par et pour l'apport d'une capacité tampon dans des eaux sulfatées ou des solutions contenant de l'acide sulfurique,
- dans lequel de l'eau sulfatée ou une solution contenant de l'acide sulfurique est introduite dans les deux chambres de cathodes d'une cellule d'électrolyse en trois parties et y est soumise à une électrolyse et à une électrodialyse, la cellule d'électrolyse étant constituée comme suit :
∘ les deux chambres de cathodes sont disposées des deux côtés de la chambre d'anodes située de manière centrée entre ces chambres,
∘ une membrane échangeuse d'anions (2) respective est disposée entre la chambre d'anodes et les chambres de cathodes,
∘ l'anode (3) est constituée d'un matériau de support revêtu à moins de 20% de substances électrochimiquement actives choisies dans le groupe constitué du graphite, du carbone vitreux, du diamant synthétique doté, des éléments chimiques de numéro atomique 44 à 46 et 75 à 79 et de leurs alliages les uns en dessous des autres ou de leurs liaisons oxydiques, le degré de couverture du matériau de support de l'anode dans le tiers inférieur de l'anode étant plus grand que dans le tiers médian, et dans le tiers médian, plus grand que dans le tiers supérieur,
∘ l'anolyte contient des composés chimiques dissous de type sulfate,
∘ la distance entre la cathode (1) et la membrane échangeuse d'anions (2) n'est ni inférieure à 0,75 mm ni supérieure à 4 mm, des éléments d'écartement (4) en matériau électriquement non conducteur étant disposés dans l'espace intermédiaire ainsi formé entre la cathode et la membrane échangeuse d'anions,
- les anions présents dans l'eau sulfatée ou la solution contenant de l'acide sulfurique étant transportés des chambres de cathodes à travers la membrane échangeuse d'anions dans la chambre d'anodes et étant ainsi séparés,
- du dioxygène et/ou de l'air et du dioxyde de carbone ou du dioxyde de carbone seul étant introduits, dans les chambres de cathodes, dans l'eau sulfatée ou la solution contenant de l'acide sulfurique dans une forme finement répartie, le dioxygène introduit à la surface des cathodes étant converti par voie électrochimique en ions hydroxyde, et le dioxyde de carbone se liant aux cations des éléments chimiques calcium et/ou magnésium et/ou potassium et/ou sodium présents dans l'eau sulfatée ou la solution contenant de l'acide sulfurique dans la chambre de cathodes pour obtenir les hydrogénocarbonates correspondants, la capacité tampon étant ainsi améliorée dans l'eau sulfatée ou la solution contenant de l'acide sulfurique,
- la densité de courant anodique dépassant la densité de courant cathodique d'au moins un facteur de cinq et la densité de courant cathodique étant inférieure à 0,1 A/cm², et la densité de courant anodique dans la partie inférieure de la cellule d'électrolyse est plus élevée que dans la partie supérieure de la cellule,
- les chambres de cathodes étant traversées de bas en haut.

2. Procédé selon la revendication 1, **caractérisé en ce que** les composés chimiques du type sulfate dissous dans l'anolyte sont choisis parmi le sulfate d'ammonium, de sodium, de potassium et de lithium et/ou les hydrogénosulfates correspondants et/ou les peroxodisulfates correspondants et/ou l'acide sulfurique.

3. Procédé selon la revendication 1, **caractérisé en ce que** les composés chimiques du type sulfate dissous dans l'anolyte sont choisis parmi le sulfate d'aluminium, de fer, de cuivre, de manganèse, de nickel lorsque des solutions contenant de l'acide sulfurique sont traitées dans les chambres de cathodes de la cellule.

4. Procédé selon l'une des revendications 1 à 3, **caractérisé en ce que** les solutions d'anolyte sont, en tant que composants dissous supplémentaires, des ions chlorure et/ou bromure et/ou fluorure dans des concentrations allant jusqu'à 1 mol/l et/ou du thiocyanationène et/ou du thiocarbamide et des dérivés de thiocarbamide et de la glycine à des concentrations allant jusqu'à 10 g/l.

5. Procédé selon l'une quelconque des revendications 1 à 4, **caractérisé en ce que** les ions de métaux lourds contenus dans les chambres de cathodes de la cellule dans l'eau sulfatée ou la solution contenant de l'acide sulfurique sont hydrolysés et précipités, et qu'une précipitation des hydroxydes de calcium et de magnésium est évitée par l'introduction de dioxyde de carbone.

6. Procédé selon l'une des revendications 1 à 5, **caractérisé en ce que**, outre les ions sulfate, les anions de brome, de chlore, de fluor, d'arsenic et de nitrate sont également séparés.

7. Dispositif de séparation des ions sulfate à partir d'eaux sulfatées ou de solutions contenant de l'acide sulfurique, et d'apport d'une capacité tampon dans l'eau sulfatée ou la solution contenant de l'acide sulfurique, comprenant :
- une cellule d'électrolyse avec au moins trois chambres d'électrodes,
∘ une chambre d'anodes étant disposée entre deux chambres de cathodes,
∘ une membrane échangeuse d'anions (2) respective étant disposée entre la chambre d'anodes et les chambres de cathodes,
∘ chaque chambre d'électrodes contenant au moins une électrode,
∘ les cathodes étant pourvues d'ouvertures et/ou de pores pour l'introduction des gaz dioxygène, air et/ou dioxyde de carbone ou dioxyde de carbone seul dans l'eau sulfatée ou la solution contenant de l'acide sulfurique, les chambres de cathodes pouvant être traversées de bas en haut,
∘ l'anode (3) est constitué d'un matériau de support revêtu à moins de 20% de substances électrochimiquement actives choisies dans le groupe constitué du graphite, du carbone vitreux, du diamant synthétique doté, des éléments chimiques de numéro atomique 44 à 46 et 75 à 79 et de leurs alliages ou dont les liaisons oxydiques sont choisies,
∘ le degré de couverture du matériau de support de l'anode dans le tiers inférieur de l'anode étant plus grand que dans le tiers médian, et dans le tiers médian, plus grand que dans le tiers supérieur
∘ la distance entre la cathode (1) et la membrane échangeuse d'anions (2) n'étant ni inférieure à 0,75 mm ni supérieure à 4 mm,
∘ des éléments d'écartement (4) en matériau électriquement non conducteur étant disposés dans l'espace intermédiaire ainsi formé entre la cathode et la membrane échangeuse d'anions.

8. Dispositif selon la revendication 7, **caractérisé en ce que** les chambres de cathode sont disposées symétriquement par rapport à une chambre d'anodes centrale adjacente.

9. Dispositif selon la revendication 7 ou 8, **caractérisé en ce que** l'anode est constituée de métal déployé, de feuilles de métal perforées, de tissus, qui ne couvrent pas plus de 20 %, de préférence pas plus de 5 % de la surface de la chambre d'anodes, et que les membranes échangeuses d'ions sont située des deux côtés face à l'anode.

10. Dispositif selon l'une des revendications 7 à 9, **caractérisé en ce que** l'anode est constituée de graphite, de carbone vitreux, ou présente un revêtement avec un diamant synthétique doté de bore.

11. Dispositif selon l'une des revendications 7 à 10, **caractérisé en ce qu'**un matériau de support de l'anode sous forme de feuilles de métal, de films, de métal déployé, de fils, de nanotubes, de tissus, sous une forme creuse en tant que petits tubes ou sous une forme de garnissages, est utilisé.

12. Dispositif selon l'une des revendications 7 à 11, **caractérisé en ce que** le matériau de support de l'anode est constitué de matériaux plastiques PVC, polyéthylène, polypropylène, PTFE et/ou PVDF.

13. Dispositif selon la revendication 12, **caractérisé en ce que** les cathodes avec des métaux, **caractérisés par** les numéros atomiques 22-25, 44 à 47, 75 à 79, ou avec leurs alliages, sont revêtus d'au moins un autre métal du groupe avec les numéros atomiques 22 à 30, 32, 40, 44, 45, 58 à 79 et le revêtement est constitué des particules nanoscopiques respectives, des nanotubes à une ou à plusieurs parois.

14. Dispositif selon l'une des revendications 7 à 13, **caractérisé en ce que** les cathodes sont conçues sous forme de feuilles de métal, de grilles, de métal déployé, de tiges, de filets, de tissus, ou sous forme de mousse.

15. Dispositif selon l'une des revendications 7 à 14, **caractérisé en ce que** des formes de matériaux recouvrant toute la surface et denses sont utilisées comme cathodes, lesquelles formes de matériaux sont pourvues d'ouvertures permettant une entrée de gaz dans le catholyte à partir de l'arrière de la cathode.

16. Dispositif selon l'une des revendications 7 à 15, **caractérisé en ce que** les cathodes sont constituées d'un corps principal stabilisateur en matériau plastique électroconducteur choisi parmi le polyéthylène, le polystyrène, le polypropylène, le polyimide ou le polyacétylène conducteurs et d'un revêtement métallique fait des matériaux tel que définis à la revendication 13.

17. Dispositif selon la revendication 7, **caractérisé en ce que** des éléments d'écartement en matériau électriquement non conducteur sont respectivement disposés dans les chambres d'électrodes de la cellule entre les électrodes et les membranes échangeuses d'anions, ce matériau étant constitué de matériau plastique résistant chimiquement aux acides et aux alcalins, et de minéraux ou de matériaux de verre ou d'autres minéraux ou matériaux non conducteurs, lequel matériau étant introduit dans l'espace intermédiaire sous forme de filets, de fibres, de faisceaux de fibres, de tissus, de noeuds ou de bandes, et présentant, en tant que filet ou tissus, une ouverture la plus grande possible, supérieure à 50 % de la surface nominale, et étant également recouvert par les autres formes de matériaux servant d'éléments d'écartement à raison de moins de 50 % de la section transversale des chambres d'électrodes allouée à la membrane échangeuse d'anions.

18. Dispositif selon la revendication 7, **caractérisé en ce qu'**un composant de répartition de flux est intégré directement au-dessus des lignes d'alimentation en électrolyte pour la chambre de cathodes de la cellule d'électrolyse dans le cadre de la cellule et autour des ouvertures de sortie des conduits, le composant de répartition de flux étant constitué d'une structure parallèlement agencée de conduits parallèles en forme de peigne, rectangulaire, ovale ou circulaire, le diamètre de ces conduits étant compris entre 0,5 et 10 mm et les espaces intermédiaires hydrauliquement imperméables entre les ouvertures des conduits présentant une largeur comprise entre 1,0 et 10 mm.
